# EUROPEAN PATENT SPECIFICATION

(11) **EP 3 324 260 B1**
(45) Date of publication and mention of the grant of the patent: **03.04.2019**
(21) Application number: 17202582.7
(22) Date of filing: 20.11.2017
(51) Int. Cl.: G05D 1/00

(54) **ELECTRONIC DEVICE AND METHOD FOR CONTROLLING UNMANNED AERIAL VEHICLE**
ELEKTRONISCHE VORRICHTUNG UND VERFAHREN ZUR STEUERUNG EINES UNBEMANNTEN LUFTFAHRZEUGS
DISPOSITIF ÉLECTRONIQUE ET PROCÉDÉ DE COMMANDE D'UN VÉHICULE AÉRIEN SANS PILOTE

(30) Priority: 18.11.2016 KR 20160153826
(43) Date of publication of application: 23.05.2018
(73) Proprietor: Samsung Electronics Co., Ltd., Gyeonggi-do 16677 (KR)
(72) Inventor: Lee, Olivia, Seoul (KR); Na, Su-Hyun, Gyeonggi-do, Yongin-si (KR); Moon, Choonkyoung, Gyeonggi-do, Suwon-si (KR); Wang, Taeho, Seoul (KR); Yoo, Eunkyung, Seoul (KR); Lee, Jongkee, Seoul (KR); Chung, Heeyoung, Gyeonggi-do, Seongnam-si (KR); Yoon, Byoung-Uk, Gyeonggi-do, Hwaseong-si (KR); Heo, Chang-Ryong, Gyeonggi-do, Suwon-si (KR)
(74) Representative: Nederlandsch Octrooibureau

(56) References cited:
- WO-A2-2015/102731
- US-A1- 2012 271 491
- US-A1- 2016 250 933

## Description

### TECHNICAL FIELD

The present disclosure relates to an electronic device. More particularly, the present disclosure relates to an electronic device and a method for controlling an unmanned aerial vehicle (UAV). Electronic devices and methods for controlling an UAV are for instance disclosed in documents US 2012/271491 A1, WO 2015/102731 A2 and US 2016/250933 A1.

### BACKGROUND

As wireless communication has come to be popular, the distribution rate of unmanned aerial vehicles (UAV) has been increasing. A UAV operates remotely from a user and thus the user needs various pieces of information for readily controlling the UAV. Therefore, user interaction may be provided in order to control the UAV.

The above information is presented as background information only to assist with an understanding of the present disclosure. No determination has been made, and no assertion is made, as to whether any of the above might be applicable as prior art with regard to the present disclosure.

### SUMMARY

An intuitive user interface (UI) based on the current state of an unmanned aerial vehicle (UAV) (e.g., the level of a battery) is not provided when a user controls a UAV, whereby it is inconvenient for the user to control the UAV.

Aspects of the present disclosure are to address at least the above-mentioned problems and/or disadvantages and to provide at least the advantages described below. Accordingly, an aspect of the present disclosure is to allow a user to provide intuitive user interaction, which is determined based on the state of a UAV.

In accordance with an aspect of the present disclosure, a method of an electronic device for controlling a UAV is provided. The method includes receiving, from the UAV, a signal including information regarding at least one parameter for determining an area where the UAV is capable of flying, determining the area where the UAV is capable of flying based on the information regarding the at least one parameter, and displaying information for indicating the determined area where the UAV is capable of flying, in a manner of superimposing the same on information for indicating a region where the UAV is located.

In accordance with another aspect of the present disclosure, an electronic device for controlling a UAV is provided. The electronic device includes a display unit, a communication unit, and a processor. The processor is functionally connected with the display unit and the communication unit, and is configured to perform control to receive, from the UAV, a signal including information regarding at least one parameter for determining an area where the UAV is capable of flying, determine the area where the UAV is capable of flying, based on the information regarding the at least one parameter, and perform control to display information indicating the determined area where the UAV is capable of flying in a manner of superimposing the same on information for indicating a region where the UAV is located.

In accordance with another aspect of the present disclosure, an electronic device is provided. The electronic device includes a housing, a display exposed through a part of the housing, at least one wireless communication circuit included in the housing, a processor electrically connected with the display and the communication circuit, and a memory electrically connected with the processor. Upon execution, the memory may store instructions to enable the processor to perform receiving location data from a UAV using a wireless communication circuit, transmitting at least a part of the location data to an external server using the wireless communication circuit, receiving map information provided based on at least a part of the location data from the external server using the wireless communication circuit, receiving state data from the UAV using the wireless communication circuit, displaying, on the display, a map that is based on at least a part of the received map information, displaying an indicator indicating the UAV in a manner of superimposing the indicator on the map displayed on the display, based on at least a part of the location data, and displaying, on the display based on the location of the indicator, a graphic UI (GUI) indicating the flight capability of the UAV based on at least a part of the state data by superimposing the same on the map.

In accordance with another aspect of the present invention, a computer readable recording medium storing a computer program for operating a UAV is provided. The computer readable recording medium may include a routine of instructions which enables the computer to perform operations, the operation including receiving location data from a UAV using a wireless communication circuit, transmitting at least a part of the location data to an external server using the wireless communication circuit, receiving map information provided based on at least a part of the location data from the external server using the wireless communication circuit, receiving state data from the UAV using the wireless communication circuit, displaying, on a display, a map that is based on at least a part of the received map information, displaying an indicator indicating the UAV in a manner of superimposing the indicator on the map displayed on the display, based on at least a part of the location data, and displaying, on the display based on the location of the indicator, a GUI indicating the flight capability of the UAV based on at least a part of the state data in a manner of superimposing the GUI on the map.

An electronic device and method according to various embodiments of the present disclosure provides a user with an intuitive UI by displaying, on a display unit of the electronic device, information indicating an area where a UAV related to the electronic device is capable of flying, so that the user can readily control the UAV.

Other aspects, advantages, and salient features of the disclosure to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1A is a diagram illustrating an example of a wireless environment according to various embodiments of the present disclosure;
FIG. 1B is a diagram illustrating another example of a wireless environment according to various embodiments of the present disclosure;
FIG. 2 is a diagram illustrating an example of a functional configuration of an unmanned aerial vehicle (UAV) according to various embodiments of the present disclosure;
FIG. 3A is a diagram illustrating an example of a structure of a UAV according to various embodiments of the present disclosure;
FIG. 3B is a diagram illustrating an example of an operation of a UAV according to various embodiments of the present disclosure;
FIGS. 3C and 3D are diagrams illustrating examples of controlling a UAV according to various embodiments of the present disclosure;
FIG. 4A is a diagram illustrating an example of a functional configuration of an electronic device according to various embodiments of the present disclosure;
FIG. 4B is a diagram illustrating an example of a connection among an electronic device, a UAV, and a cloud server according to various embodiments of the present disclosure;
FIG. 5 is a diagram illustrating an example of an operation flow of an electronic device according to various embodiments of the present disclosure;
FIG. 6 is a diagram illustrating an example of a user interface (UI) according to various embodiments of the present disclosure;
FIG. 7 is a diagram illustrating an example of a signal flow between an electronic device and a UAV according to various embodiments of the present disclosure;
FIG. 8A is a diagram illustrating an example of a signal flow between an electronic device and a UAV for determining an area where the UAV is capable of flying according to various embodiments of the present disclosure;
FIG. 8B is a diagram illustrating an example of a UI including objects for determining parameters according to various embodiments of the present disclosure;
FIG. 8C is a diagram illustrating an example of a UI for determining a custom mode according to various embodiments of the present disclosure;
FIG. 9A is a diagram illustrating an example of an operation flow of an electronic device for determining an area where a UAV is capable of flying based on a state of a battery of the UAV according to various embodiments of the present disclosure;
FIG. 9B is a diagram illustrating an example of an operation flow of an electronic device for determining an area where a UAV is capable of flying based on a received signal strength of a signal received from the UAV according to various embodiments of the present disclosure;
FIG. 9C is a diagram illustrating an example of an operation flow of an electronic device for determining an area where a UAV is capable of flying based on a wind speed and a wind direction at a location point where the UAV is located according to various embodiments of the present disclosure;
FIG. 9D is a diagram illustrating an example of a UI displaying a state of a UAV according to various embodiments of the present disclosure;
FIG. 9E is a diagram illustrating another example of a UI displaying a state of a UAV according to various embodiments of the present disclosure;
FIG. 9F is a diagram illustrating another example of a UI displaying a state of a UAV according to various embodiments of the present disclosure;
FIG. 9G is a diagram illustrating another example of a UI displaying a state of a UAV according to various embodiments of the present disclosure;
FIG. 9H is a diagram illustrating another example of a UI displaying a state of a UAV according to various embodiments of the present disclosure;
FIG. 10A is a diagram illustrating an example of a signal flow between an electronic device and a UAV for displaying an alarm associated with a UAV according to various embodiments of the present disclosure;
FIG. 10B is a diagram illustrating another example of a signal flow between an electronic device and a UAV for displaying an alarm associated with a UAV according to various embodiments of the present disclosure;
FIG. 10C is a diagram illustrating an example of an operation flow of an electronic device for displaying an alarm associated with a UAV according to various embodiments of the present disclosure;
FIG. 10D is a diagram illustrating an example of a UI that provides guidance associated with controlling a UAV according to various embodiments of the present disclosure;
FIG. 10E is a diagram illustrating an example of another UI that provides guidance associated with controlling a UAV according to various embodiments of the present disclosure;
FIG. 11A is a diagram illustrating an example of a UI displaying a state of a UAV based on a route of the UAV according to various embodiments of the present disclosure;
FIG. 11B is a diagram illustrating an example of a UI displaying a state of a UAV based on a route of the UAV, a wind speed, and a wind direction according to various embodiments of the present disclosure;
FIG. 12A is a diagram illustrating an example of an operation flow of an electronic device for updating and displaying an area where a UAV is capable of flying according to various embodiments of the present disclosure; and
FIG. 12B is a diagram illustrating an example of a UI for updating and displaying an area where a UAV is capable of flying according to various embodiments of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The terms used in the present disclosure are only used to describe specific embodiments, and are not intended to limit the present disclosure. Unless defined otherwise, all terms used herein, including technical and scientific terms, have the same meaning as those commonly understood by a person skilled in the art to which the present disclosure pertains. Such terms as those defined in a generally used dictionary may be interpreted to have the meanings equal to the contextual meanings in the relevant field of art, and are not to be interpreted to have ideal or excessively formal meanings unless clearly defined in the present disclosure. In some cases, even the term defined in the present disclosure should not be interpreted to exclude various embodiments of the present disclosure.

Hereinafter, in various embodiments of the present disclosure, hardware approaches will be described as an example. However, various embodiments of the present disclosure include a technology that uses both hardware and software and thus, the various embodiments of the present disclosure may not exclude the perspective of software.

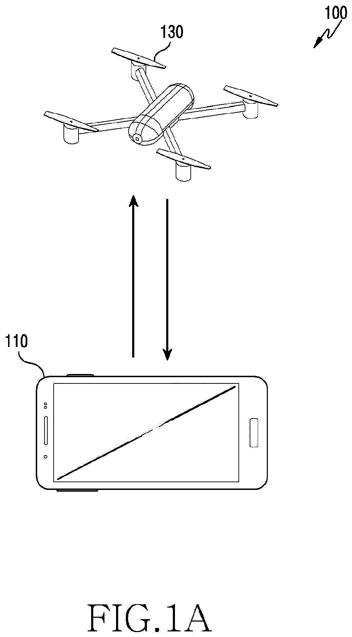

FIG. 1A is a diagram illustrating an example of a wireless environment according to various embodiments of the present disclosure.

Referring to FIG. 1A, a wireless environment 100 may include an electronic device 110 and/or an unmanned aerial vehicle or uninhabited aerial vehicle (UAV) 130.

The electronic device 110 may be a device having mobility. For example, the electronic device 110 may be a mobile phone, a smart phone, a music player, a portable game console, a navigation system, a laptop computer, and the like. The electronic device 110 may be referred to as a user equipment (UE), a mobile station, a terminal, a station (STA), a user device, and the like. In some embodiments, the electronic device 110 may be a fixed device.

The electronic device 110 may be a device for providing a user input to the UAV 130. For example, when a designated input is received from the user, the electronic device 110 may provide information corresponding to the designated input to the UAV 130. The designated input may be an input for controlling operation or mobility of the UAV 130. Also, the information corresponding to the designated input may be information for controlling operation or mobility of the UAV 130.

To provide a user input to the UAV 130, the electronic device 110 may display a user interface (UI) including at least one object for controlling the UAV 130 so that the user may provide a user input to the UAV 130. For example, the at least one object may include an input object which is used for controlling the mobility of the UAV 130, or the like.

The electronic device 110 may be a device for outputting information related to the UAV 130. In some embodiments, the electronic device 110 may display information related to the UAV 130 in the display unit of the electronic device 110. In other embodiments, the electronic device 110 may provide, to a user of the electronic device 110, information related to the UAV 130 through an output unit, such as a speaker of the electronic device 110, haptics, or the like.

To output the information related to the UAV 130, the electronic device 110 may transmit a signal to the UAV 130 and/or a server (not illustrated) through a wired/wireless communication path. For example, the transmitted signal may include information that requests the UAV 130 or the server to provide information that the electronic device 110 is to output.

To output the information related to the UAV 130, the electronic device 110 may receive a signal from the UAV 130 or the server through a wireless communication path. For example, the received signal may include the information related to the UAV 130. The information related to the UAV 130 may include the state of a battery of the UAV 130, information obtained by the UAV 130, information associated with an area where the UAV 130 is located, and the like.

Based on the information related to the UAV 130, which is displayed in the electronic device 110, a user may recognize information associated with the state of the UAV 130, or may recognize information that the UAV 130 obtains.

The UAV 130 may be a device that is manufactured to perform a designated task without a pilot. Also, the UAV 130 may be a device having mobility. For example, the UAV 130 may take off to start performing a designated task. Also, the UAV 130 may fly by changing the direction or the altitude so as to perform a designated task. Also, upon completion of a designated task or to supply resources (e.g., fuel, battery, or the like), the UAV 130 may land.

The UAV 130 may be referred to as a drone depending on various embodiments.

The UAV 130 may receive a signal from the electronic device 110. Also, the UAV 130 may transmit a signal to the electronic device 110. In other words, the UAV 130 may communicate with another entity (e.g., the electronic device 110, a controller, or the like).

A communication path between the UAV 130 and the other entity may be set variously. In some embodiments, the communication path between the UAV 130 and the other entity may be a direct communication path. For example, the UAV 130 may be connected with the other entity based on a scheme, such as Bluetooth (BT), BT low energy (BLE), long term evolution (LTE) direct, Wi-Fi direct, or the like. In some embodiments, the communication path between the UAV 130 and the other entity may be a communication path in which a signal is transmitted or received through a relay node such as an evolved node B (eNB) or an access point (AP). In other words, the UAV 130 may be connected with the other entity through a relay node. For example, the UAV 130 may be connected with the other entity based on a cellular communication scheme, such as LTE, or based on a Wi-Fi scheme.

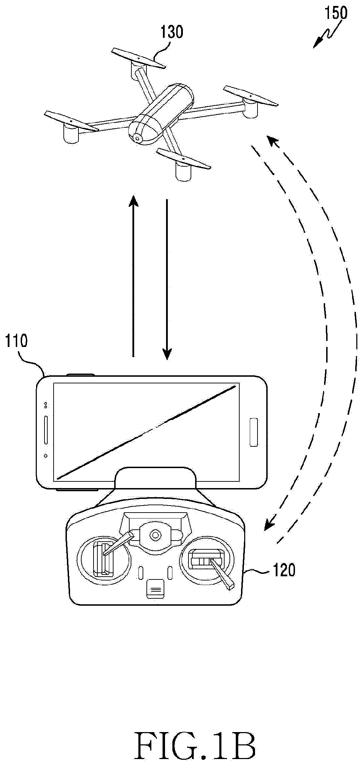

FIG. 1B is a diagram illustrating another example of a wireless environment according to various embodiments of the present disclosure.

FIG. 1B illustrates an example of a wireless environment when a device for outputting information related to the UAV 130 is independently separated from a device for controlling the UAV 130.

Referring to FIG. 1B, a wireless environment 150 may include the electronic device 110, a controller 120, and/or the Unmanned Aerial Vehicle or uninhabited aerial vehicle (UAV) 130.

The electronic device 110 may be a device having mobility. Also, the electronic device 110 may be a device for outputting information related to the UAV 130.

The controller 120 may be a fixed device or a device having mobility.

The electronic device 120 may be a device for providing a user input to the UAV 130. For example, when a designated input is received from a user, the controller 120 may provide information corresponding to the designated input to the UAV 130. The designated input may be an input for controlling operation or mobility of the UAV 130. Also, information corresponding to the designated input may be information for controlling operation or mobility of the UAV 130.

To provide a user input to the UAV 130, the controller 120 may include a main body and various types of input objects, such as a joystick, a switch, a knob, and the like, which are used for controlling the mobility of the UAV 130 and are mounted on the main body.

In some embodiments, the controller 120 may further include a configuration for holding the electronic device 110. For example, the controller 120 may hold the electronic device 110 through a docking structure (e.g., a guide unit) corresponding to the external appearance of the electronic device 110. As another example, the controller 120 may hold the electronic device 110 through a docking structure to which the electronic device 110 is attached using a user suction device, a magnet, or the like.

In some embodiments, the controller 120 may include a separate display unit which is configured to display a UI for controlling the UAV 130. In other embodiments, the controller 120 may not include a separate display unit which is configured to display a UI for controlling the UAV 130. In this instance, a UI for controlling the UAV 130 may be provided to a user through a display unit of the electronic device 110. For example, the controller 120 may be a bumper case of the electronic device 110, an accessory including a simplified knob of a suction type, or the like.

In some embodiments, the controller 120 may be connected with the electronic device 110 through a wired or wireless connection. For example, the controller 120 may be connected with the electronic device 110 based on a scheme, such as BT, BLE, LTE direct, Wi-Fi direct, or the like. As another example, the controller 120 may be connected with the electronic device 110 based on a cellular communication scheme such as LTE, or a scheme that needs a relay node, such as Wi-Fi. As another example, the controller 120 may be connected with the electronic device 110 through a wired communication unit, such as a USB connector or the like.

The UAV 130 may be a device that is manufactured to perform a designated task without a pilot. Also, the UAV 130 may be a device having mobility. The UAV 130 may be referred as a drone depending on embodiments. Also, the UAV 130 may receive a signal from the electronic device 110 and may transmit a signal to the electronic device 110. Also, the UAV 130 may receive a signal from the controller 120 and may transmit a signal to the controller 120. In other words, the UAV 130 may communicate with another entity (e.g., the electronic device 110, the controller 120, or the like).

A communication path between the UAV 130 and the other entity may be set variously. In some embodiments, the communication path between the UAV 130 and the other entity may be a direct communication path. For example, the UAV 130 may be connected with the other entity based on a scheme, such as BT, BLE, LTE direct, Wi-Fi direct, or the like. In some embodiments, the communication path between the UAV 130 and the other entity may be a communication path in which a signal is transmitted or received through a relay node such as an eNB, an AP, or the like. In other words, the UAV 130 may be connected with the other entity through a relay node. For example, the UAV 130 may be connected with the other entity based on a cellular communication scheme, such as LTE, or based on a Wi-Fi scheme.

Each of an electronic device, a controller, a UAV, which will be described throughout the various embodiments of the present disclosure, may be located in the wireless environment 100 or 150.

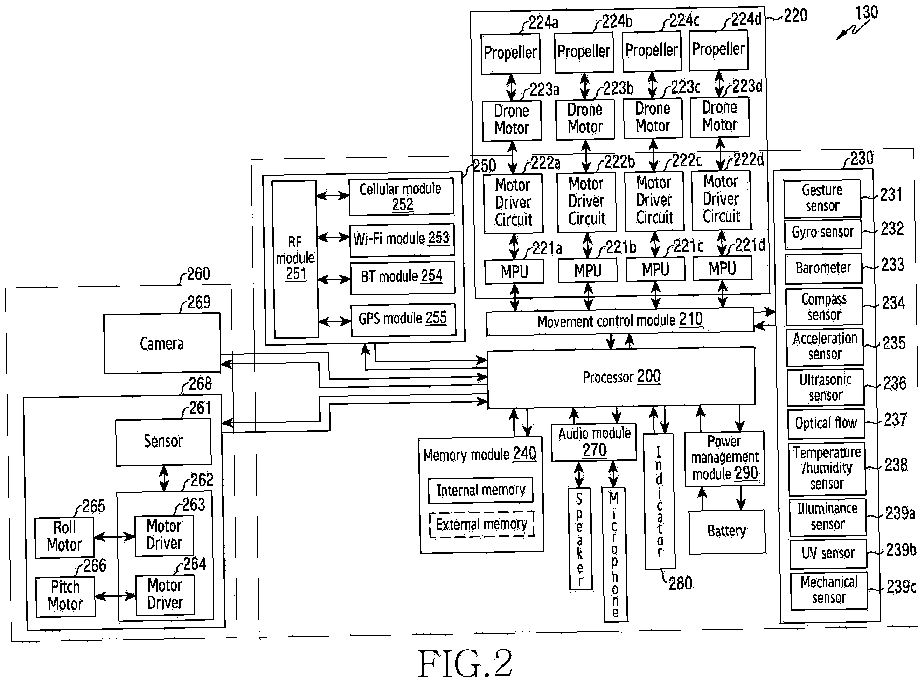

FIG. 2 is a diagram illustrating an example of a functional configuration of a UAV according to various embodiments of the present disclosure. The functional configuration may be included in the UAV 130 of FIGS. 1A and 1B.

Referring to FIG. 2, the UAV 130 may include a processor 200, a movement control module 210, a movement module 220, a sensor module 230, a memory module 240, a communication module 250, a camera module 260, an audio module 270, an indicator 280, and/or power management module 290.

The processor 200 may control operation of the UAV 130. For example, the processor 200 may control at least one other element of the UAV 130. As another example, the UAV 130 may perform calculation related to an application or data processing.

The movement control module 210 may control the movement of the UAV 130 using location and posture information of the UAV 130. The movement control module 210 may include a flight control module and a posture control module. The flight control module may control the x-axis rotation (roll rotation) of the UAV 130, may control the y-axis rotation (yaw rotation), may control the z-axis rotation (pitch rotation), or may control movement (throttle) based on the location of the UAV 130 and the posture information of the UAV 130 which are obtained by the posture control module. The movement control module 210 may control a hovering operation (hovering).

The movement module 220 may move the UAV 130 under the control of the movement control module 210. When the UAV 130 is a quadcopter, the movement module 220 may include microprocessor units (MPU) 221a to 221d, motor driver circuits 222a to 222d, motors 223a to 223d, and propellers 224a to 224d. Each of the MPU 221a to 221d may output a control signal to rotate at least one of the propellers 224a to 224d based on a signal received from the movement control module 210. Each of the motor driver circuits 222a to 222d may convert a control signal output from each of the MPU 221a to 221d into a driving signal, and may output the same. Each of the motors 223a to 223d may control the rotation of each of the propellers 224a to 224d based on a driving signal output from each of the motor driver circuits 222a to 222d.

The movement control module 210 and the movement module 220 may be navigation devices.

The sensor module 230 may measure the physical quantity or detect the operation state of the UAV 130, and convert the measured or detected information into an electronic signal. The sensor module 230 may include a gesture sensor 231 for sensing the motion and/or a gesture of an object recognized by the camera module 260, a gyro sensor 232 for measuring the angular speed of the flying UAV 130 (or measuring the variation of rotation), a barometer 233 for measuring a change in atmospheric pressure and/or atmospheric pressure, a terrestrial magnetism sensor (compass sensor) 234 for measuring earth's magnetic field, an acceleration sensor 235 for measuring the acceleration of the flying UAV 130, an ultrasonic sensor 236 for measuring the distance between an object and the UAV 130 through an output ultrasonic sound, and measuring the strength and the direction of wind that passes through a transmission/reception route of a ultrasound, an optical flow 237 for calculating a location by recognizing the topology or the pattern of the ground using the camera module 260, a temperature-humidity sensor 238 for measuring the temperature and humidity, an illuminance sensor 239a for measuring illuminance; and/or an ultra violet sensor 239b for measuring an ultra violet ray.

Also, the sensor module 230 may further include a mechanical sensor 239c for determining the wind direction and the wind speed at a location point where the UAV 130 is located.

The sensor module 230 may provide information for controlling an operation of the UAV 130 to the movement control module 210. For example, the sensor module 230 may generate information for indicating the posture of the UAV 130 using the gyro sensor 232 and the acceleration sensor 235. In the case of generating the information for indicating the posture of the UAV 130, the sensor module 230 may increase the output of the terrestrial magnetism sensor 234 to prevent the drift of the gyro sensor 232.

The memory module 240 may include an internal memory and an external memory. The memory 240 may store, for example, commands or data relevant to at least one other element of the UAV 130. The memory 240 may store software and/or a program. The program may include a kernel, middleware, an application programming interface (API), and/or applications. One or more of the kernel, the middleware, and the API may be referred to as an operating system (OS).

The communication module 250 may be a wireless communication module. The communication module 250 may include a radio frequency (RF) module 251, a cellular module 252, a Wi-Fi module 253, a BT module 254, and/or global positioning system (GPS) module 255. The RF module 251 may control the UAV 130 so that the UAV 130 transmits or receives a signal. The cellular module 252 may interoperate with the RF module 251, and may perform control so that the UAV 130 transmits or receives a signal through a scheme or standard such as LTE, LTE Advanced (LTE-A), code division multiple access (CDMA), Wideband CDMA (WCDMA), universal mobile telecommunications system (UMTS), wireless broadband (WiBro), or global system for mobile communication (GSM). The Wi-Fi module 253 may interoperate with the RF module 251 and may perform control so that the UAV 130 transmits or receives a signal using a wireless local area network (WLAN) service. The BT module 254 may interoperate with the RF module 251, and may perform control so that the UAV 130 transmits and receives a signal using a proximity direct communication service.

The GPS module 255 may output information associated with a location (e.g., the longitude, latitude, altitude, GPS speed, GPS heading, or the like of the UAV 130). Also, the GPS module 255 may output information associated with a reference time (or accurate time).

The camera module 260 may include a camera 269 and/or gimbal 268. The gimbal 268 may include a gimbal controller 262, a gyro/acceleration sensor 261, motor driver circuits 263 and 264, and/or motors 265 and 266 (e.g., a roll motor, a pitch motor, etc.).

Although not illustrated, the camera module 260 may include a lens, an image sensor, an image signal processor, a camera controller, and the like. The lens may perform focusing using the properties of light, such as straightness and refraction, and may zoom in and out on a subject. The image sensor may have the structure of a complementary metal-oxide semiconductor (CMOS) or a charge coupled device (CCD) (or a CMOS image sensor (CIS)).

The image signal processor may include an image pre-processing unit and an image post-processing unit. The image pre-processing unit may perform auto white balance (AWB), auto exposure (AE), auto focusing (AF) extracting and processing, lens shading correction, and the like. The image post-processing unit may perform color interpolation, image processing chain (IPC), color convert, and the like. Also, the image signal processor may include an encoder which may encode processed images, and a decoder which may decode an encoded image.

The camera controller may control the angle of a lens upward, downward, leftward or rightward based on composition information and/or camera control information output from the processor 200, thereby controlling the composition including a subject and/or a camera angle (photographing angle).

The gimbal 268 may control the slide of the camera 269 so that the camera 269 maintains the posture irrespective of the movement of the UAV 130. The gimbal 268 may include the sensor 261, the gimbal controller 262, the motor driver circuit 263 and 264.

The sensor 261 may include a gyro sensor and an acceleration sensor, and may recognize the movement of the UAV 130. The gimbal controller 262 may analyze the value of measurement by the sensor 261, and may recognize the movement of the UAV 130. The gimbal controller 262 may generate compensation data based on the movement of the UAV 130. The compensation data may control one or more of the x-axis rotation (roll rotation) and the z-axis rotation (pitch rotation) of the camera module 260. The gimbal 268 may provide, to one or more of the roll motor 265 and a pitch motor 266, compensation data for one or more of the x-axis rotation and the z-axis rotation of the camera module 260. One or more of the roll motor 265 and the pitch motor 266 may compensate for one or more of the roll rotation and the pitch rotation of the camera module 260, which are attributable to the movement of the UAV 130.

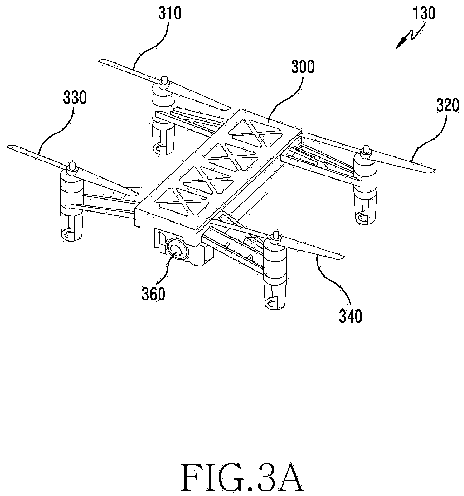

FIG. 3A is a diagram illustrating an example of a structure of a UAV according to various embodiments of the present disclosure. The structure may be the structure of the UAV 130 of FIGS. 1A and 1B.

Although the description of FIG. 3A is provided by assuming that the UAV 130 is a quadcopter drone, this is merely an example used for illustrative purpose. According to various embodiments, the UAV 130 may be embodied as various different types of UAVs. For example, the UAV 130 may be a hexacopter drone, an octocopter drone, and the like.

Referring to FIG. 3A, the UAV 130 may include a housing 300, a main board included in the housing 300, a camera (or gimbal camera) 360, and/or propellers 310 to 340. As illustrated in FIG. 3A, the UAV 130 may install the gimbal camera 360 in a lower part of the main board. The UAV 130 may photograph an image using the gimbal camera 360.

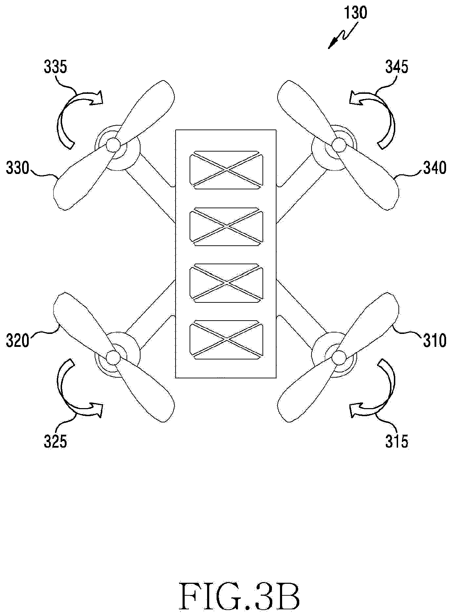

FIG. 3B is a diagram illustrating an example of operation of a UAV according to various embodiments of the present disclosure. The operation of the UAV may be the operation of the UAV 130 of FIGS. 1A and 1B.

Referring to FIG. 3B, the UAV 130 may rotate propellers that face each other in the same direction, and may rotate neighboring propellers in different directions. For example, the propeller 310 rotates in the clockwise direction 315. The propeller 320 rotates in the counterclockwise direction 325. The propeller 330 rotates in the clockwise direction 335. The propeller 340 rotates in the counterclockwise direction 345. Some of the propellers rotate in different directions in order to reserve angular momentum. For example, when all of the four propellers rotate in the same direction, the fuselage of the UAV 130 may rotate in one direction. Therefore, the UAV 130 reserves angular momentum through the propellers rotating in different directions, thereby preventing the fuselage of the UAV 130 from rotating.

The operation of controlling the posture of the UAV 130 and controlling flight may be performed by the movement control module 210. The movement control module 210 may analyze an output of the sensor module 230, and may recognize the current state of the UAV 130. The movement control module 210 may use a part or all of the gyro sensor 232 for measuring angular momentum of the UAV 130, the acceleration sensor 235 for measuring acceleration momentum of the UAV 130, the terrestrial magnetism sensor 234 for measuring earth's magnetic field, the barometer 233 for measuring the altitude, and the GPS module 255 for outputting the three-dimensional location of the UAV 130. The movement control module 210 may control the rotation of the propellers 310 to 340 based on measurement information output from the sensor module 230 and the GPS module 255, so that the UAV 130 maintains the posture during the flight.

The movement control module 210 may analyze the result of the measurement by the sensor module 230 and the GPS module 255, and may reliably control the flight of the drone.

The movement control module 210 may increase the rotation speed of a propeller that is located opposite a desired flight direction so that the UAV 130 moves in the desired flight direction. Also, the movement control module 210 may decrease the rotation speed of a propeller that is located in the same side of a desired flight direction so that the UAV 130 moves in the desired flight direction. For example, the movement control module 210 may decrease the rotation speed of a propeller located in one side and increase the rotation speed of a propeller located in the opposite side so that the UAV 130 moves in a manner of being tilted to the one side.

The movement control module 210 may control the rotation speed of the two propellers that face each other (i.e., the propellers rotating in the same direction) so that the UAV 130 changes the direction (or rotates). For example, the movement control module 210 may increase the rotation speed of the propeller 310 and the propeller 330 so that the UAV 130 rotates in the counterclockwise direction. As another example, the movement control module 210 may decrease the rotation speed of the propeller 320 and the propeller 340 so that the UAV 130 rotates in the counterclockwise direction.

The movement control module 210 may increase the rotation speed of all propellers so that the UAV 130 rises. Also, the movement control module 210 may decrease the rotation speed of all propellers so that the UAV 130 descends.

The UAV 130 may move by changing the direction upward, downward, leftward, or rightward in multi-dimensional space (e.g., three-dimensional (3D) space). For example, the UAV 130 may control the rotation of the propellers 310 to 340 so as to ascend, descend, or change the direction leftward or rightward, and to go forward, backward, leftward, or rightward. The movement of the UAV 130 may be controlled by the four commands as shown in Table 1.

**Table 1**

| | |
|---|---|
| ascend, descend | Throttle |
| to the left, to the right | Yaw |
| go forward, backward | pitch |
| go leftward, rightward | Roll |

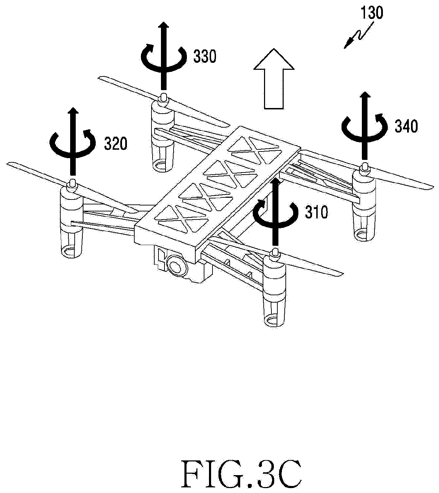

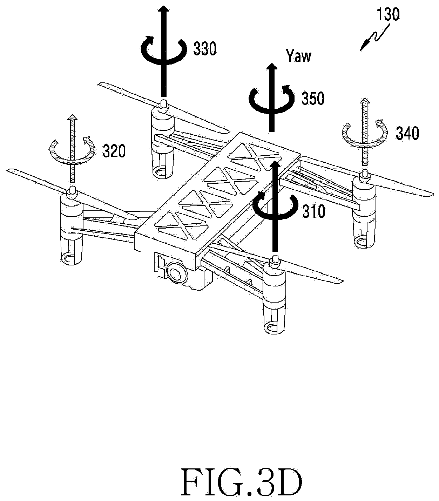

FIGS. 3C and 3D are diagrams illustrating examples of controlling a UAV according to various embodiments of the present disclosure.

Referring to FIGS. 3C and 3D, the UAV 130 may ascend by increasing the revolution per minute (RPM) of the propellers 310 to 340, and may descend by decreasing the RPM of the propeller 310 to 340. Also, the UAV 130 may go forward by increasing the RPM of the propeller 310 and the propeller 320, and may go backward by decreasing the RPM of the propeller 330 and the propeller 340. Also, the UAV 130 may go leftward by increasing the RPM of the propeller 310 and the propeller 340, and may go rightward by decreasing the RPM of the propeller 320 and the propeller 330. Also, as illustrated in FIG. 3D, the direction of the UAV 130 may be changed to the left or right by rotating propellers arranged in one diagonal direction (e.g., propeller 310 and the propeller 330 or propeller 320 and the propeller 340) faster than the other propellers arranged in the other diagonal direction. For example, the direction of the UAV 130 may be changed to the left 350 by increasing the RPM of the propeller 310 and the propeller 330, or by decreasing the RPM of the propeller 320 and the propeller 340.

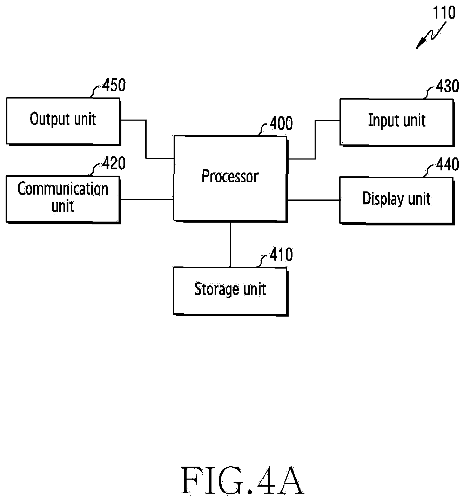

FIG. 4A is a diagram illustrating an example of a functional configuration of an electronic device according to various embodiments of the present disclosure. The configuration may be included in the electronic device 110 of FIGS. 1A and 1B.

Referring to FIG. 4A, the electronic device 110 may include a processor 400, a storage unit 410, a communication unit 420, an input unit 430, a display unit 440, and/or an output unit 450.

The processor 400 may control operation of the electronic device 110. For example, the processor 400 may transmit or receive a signal through the communication unit 420. The processor 400 may record data in the storage unit 410, and may read data recorded in the storage unit 410. According to various embodiments, the processor 400 may include a plurality of processors. For example, the controller 400 may include an application processor (AP) that controls a higher layer such as an application program or the like, a communication processor (CP) that executes control for communication, and the like.

The processor 400 may be configured to implement the procedures and/or methods proposed in the present disclosure.

The storage unit 410 may store a control command cord for controlling the electronic device 110, control data, or user data. For example, the storage unit 410 may include an application, an OS, middleware, and a device driver.

The storage unit 410 may include one or more of a volatile memory and a non-volatile memory. The volatile memory may include a dynamic random access memory (DRAM), a static RAM (SRAM), a synchronous DRAM (SDRAM), a phrase-change RAM (PRAM), a magnetic RAM (MRAM), a resistive RAM (RRAM), ferroelectric RAM (FeRAM), and the like. The non-volatile memory may include read only memory (ROM), programmable ROM (PROM), electrically programmable ROM (EPROM), electrically erasable ROM (EEPROM), flash memory, and the like.

The storage unit 410 may include a non-volatile media, such as a hard disk drive (HDD), a solid state disk (SSD), an embedded multimedia card (eMMC), and a universal flash storage (UFS).

The storage unit 410 may be operationally coupled to the processor 400.

The communication unit 420 may include various communication functions (e.g., cellular communication, BT, near field communication (NFC), Wi-Fi, and the like) for communication between the electronic device 110 and at least one external device (e.g., the controller 120, the UAV 130, and the like). In other words, the communication unit 420 may establish communication between the electronic device 110 and the at least one external device. For example, the communication unit 420 may communicate with an external device through wireless or wired communication.

The communication unit 420 may be operationally or functionally coupled to the processor 400.

The input unit 430 may receive commands or data from a user. The input unit 430 may be a touch panel that is coupled to the display unit 440. The input unit 430 may detect a touch or a hovering input provided by a finger and a pen. The input unit 430 may include a sensor. The sensor may be independently attached to the touch panel of the input unit 430. Various types of inputs may be received by the input unit 430. For example, the input received by the input unit 430 may include a touch- and-release input, a drag-and-drop input, and the like. The input unit 430 may provide the received input and data related to the received input to the processor 400.

The input unit 430 may be operationally or functionally coupled to the processor 400.

The display unit 440 may a liquid crystal display (LCD) or a light emitting diode (LED) display. The display unit 440 may display various types of information (e.g., multi-media data, text data, or the like) to a user. For example, the display unit 440 may display a GUI so that a user interacts with the electronic device 110.

The display unit 440 may be operationally or functionally coupled to the processor 400.

The input unit 430 and the display 440 may be embodied as an integrated touch screen.

The output unit 450 may be functionally coupled to the input unit 430.

The output unit 450 may provide, to a user, information generated or processed by the electronic device 110. For example, the output unit 450 may include one or more of an audio module, an indicator, and a motor (e.g., haptics or the like).

For example, the audio module may bi-directionally convert a sound and an electric signal. The audio module may process sound information output through a speaker, a receiver, earphones, or the like. When the output unit 450 is functionally coupled to the input unit 430, the audio module may process the sound information input through a microphone or the like.

The indicator may display a predetermined state of the electronic device 110 or a part thereof (e.g., the processor 400), for example, a boot-up state, a message state, or a charging state. The motor may convert an electrical signal into mechanical vibrations, and may generate a vibration or haptic effect.

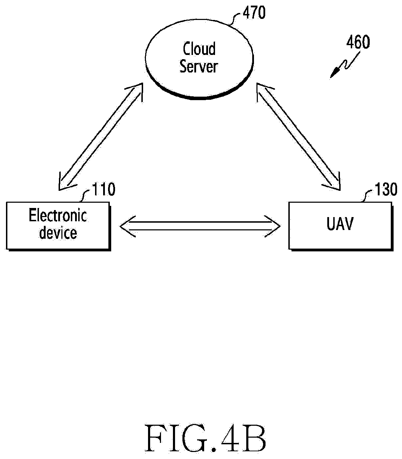

FIG. 4B is a diagram illustrating an example of a connection among an electronic device, a UAV, and a cloud server according to various embodiments of the present disclosure.

Referring to FIG. 4B, the schematic diagram 460 may include the electronic device 110, the UAV 130, and/or a cloud server 470.

The electronic device 110 may include the functional configuration illustrated in FIG. 4A. The UAV 130 may include the functional configuration illustrated in FIG. 2.

The electronic device 110 may communicate with the UAV 130 through a wireless path, in order to control the UAV 130. For example, the electronic device 110 may transmit, to the UAV 130, information for controlling the mobility of the UAV 130 or a signal for requesting information associated with the UAV 130, and may receive, from the UAV 130, information associated with the state of the UAV 130. Although not illustrated in FIG. 4B, the electronic device 110 may transmit information to the UAV 130 or may receive information from the UAV 130, through a relay node.

The electronic device 110 may communicate with the cloud server 470 through a wireless path, in order to control the UAV 130. The electronic device 110 may transmit, to the cloud server 470, a message for requesting the provision of the information associated with the UAV 130, in order to obtain the information associated with the UAV 130. For example, in order to effectively control the UAV 130, the electronic device 110 may request, from the cloud server 470, information associated with a region where the UAV 130 is located (e.g., map or satellite picture) or information associated with the current weather, as the information associated with the UAV 130. As another example, the electronic device 110 may transmit the information associated with the UAV 130 in order to store the information associated with the UAV 130 in the database of the cloud server 470. The cloud server 470 may provide the information associated with the UAV 130 to the electronic device 110 in response to a request from the electronic device 110. The information provided from the cloud server 470 to the electronic device 110 may be information stored in the database of the cloud server 470 or information that the cloud server 470 obtains from another server.

The UAV 130 may communicate with the cloud server 470 through a wireless path. For example, the UAV 130 may transmit a message to the cloud server 470 in order to periodically report the location of the UAV 130. As another example, the UAV 130 may transmit a message to the cloud server 470 in order to store, in the cloud server, information that the UAV 130 obtains. As another example, the UAV 130 may receive, from the cloud server 470, information stored in the database of the cloud server 470.

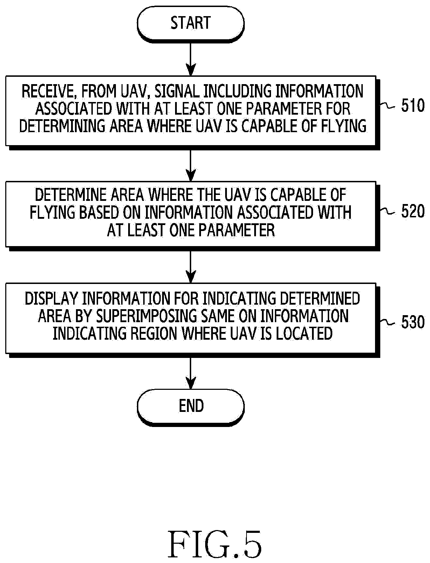

FIG. 5 is a diagram illustrating an example of an operation flow of an electronic device according to various embodiments of the present disclosure. The operation flow may be performed by the electronic device 110 illustrated in FIGS. 1A and 1B, or the processor 400 of the electronic device 110.

Referring to FIG. 5, in operation 510, the electronic device 110 receives, from the UAV 130, a signal including information associated with at least one parameter for determining an area where the UAV 130 is capable of flying. The at least one parameter may be at least one factor that affects the flight of the UAV 130. For example, the at least one parameter may be one or more of the state of a battery of the UAV 130 (in other words, the amount of charge remaining in the battery of the UAV 130), the strength and direction of wind at a location point where the UAV 130 is located, the distance between the UAV 130 and the electronic device 110, the distance between the UAV 130 and the controller 120, legal regulations that restrict the flight of the UAV 130, an area that does not physically allow the flight of the UAV 130, and an area where the UAV 130 may fall into a state of being out of control. Also, the information associated with the at least one parameter may include data indicating the value of each of the at least one parameter or data indicating the degree or limit of each of the at least one parameter. For example, the information associated with the at least one parameter may include a value indicating that the amount of charge remaining in the battery of the UAV 130 is 30%. As another example, the information associated with the at least one parameter may include data indicating that the strength of wind at a location point where the UAV 130 is located is x (m/s) and the direction of the wind is east.

Also, the signal including the information associated with the at least one parameter may be transmitted from the UAV 130 to the electronic device 110 using various schemes. In some embodiments, the signal including the information associated with the at least one parameter may be transmitted from the UAV 130 to the electronic device 110 in response to a request from the electronic device 110. In other embodiments, the signal including the information associated with the at least one parameter may be transmitted from the UAV 130 to the electronic device 110 by a predetermined (designated) period.

In other words, the electronic device 110 may receive, from the UAV 130, information for assisting the electronic device 110 in determining, identifying, or estimating an area where the UAV 130 is capable of flying.

In some embodiments, the electronic device 110 may receive a signal including information associated with at least one parameter for determining an area where the UAV 130 is capable of flying from a server, such as the cloud server 470 illustrated in FIG. 4B.

In operation 520, the electronic device 110 may determine an area where the UAV 130 is capable of flying based on the information associated with the at least one parameter.

The location of the area where the UAV 130 is capable of flying may be determined based on a location point where the UAV 130 is located. Also, the information associated with the point where the UAV 130 is located may be obtained from a signal transmitted from the UAV 130. The signal including the information associated with the location point where the UAV 130 is located may be generated based on information obtained by the GPS module 255 of the UAV 130 or the sensor module 230 of the UAV 130. Also, the signal including the information associated with the location point where the UAV 130 is located may be transmitted from the UAV 130 based on a predetermined period, or may be transmitted from the UAV 130 in response to a request from the electronic device 110.

The size (or extent) or the shape of the area where the UAV 130 is capable of flying may be determined based on the operation state of the UAV 130 and/or the state of a region where the UAV is located. For example, when the information associated with the at least one parameter includes data associated with the battery state of the UAV 130, the electronic device 110 may determine a size corresponding to data associated with the battery state of the UAV 130, as the size of the area where the UAV 130 is capable of flying. As another example, when the information associated with the at least one parameter includes data associated with the battery state of the UAV 130 and data associated with a wind speed and direction at a location point which the UAV 130 is located, the electronic device 110 may determine a size corresponding to the data associated with the battery state of the UAV 130 and the data associated with the wind speed and direction as the size of the area where the UAV 130 is capable of flying, and may determine a shape corresponding to the wind speed and direction as the shape of the area where the UAV 130 is capable of flying. As another example, when the information associated with the at least one parameter includes data associated with the battery state of the UAV 130 and data indicating the distance between the UAV 130 and the electronic device 110, the electronic device 110 may determine a size corresponding to data associated with the battery state of the UAV 130 and data indicating the distance between the UAV 130 and the electronic device 110, as the size of the area where the UAV 130 is capable of flying.

In some embodiments, the electronic device 110 may determine the area where the UAV 130 is capable of flying by combining information received from the UAV 130 and information received from the server. For example, it is assumed that the electronic device 110 receives, from the UAV 130, information associated with the battery state of the UAV 130, and receives, from the server, region information indicating a region where the flight of the UAV 130 is restricted (due to geographical limitations, legal regulations, or the like). In this instance, the electronic device 110 may determine the area where the UAV 130 is capable of flying by combining a first area where the UAV 130 is capable of flying, which is determined based on the information associated with the battery state of the UAV 130, and a second area where the UAV 130 is capable of flying, which is determined based on the information associated with the region where the flight of the UAV 130 is restricted.

In operation 530, the electronic device 110 may display information for indicating the determined area where the UAV 130 is capable of flying in a manner of superimposing the same on information for indicating a region where the UAV 130 is located.

The information for indicating the region where the UAV 130 is located may be set in various formats.

In some embodiments, the information for indicating the region where the UAV 130 is located may be map information indicating the region where the UAV 130 is located. The map information may be obtained in various schemes. For example, the map information may be stored in advance in the storage unit 410 of the electronic device 110. In other embodiments, the map information may be received from an external node, such as a server or the like, in response to a request from the electronic device 110. In other embodiments, the map information may be received from the external nodes by a predetermined period.

In other embodiments, the information for indicating the region where the UAV 130 is located may be image information obtained by photographing the region where the UAV 130 is located. The image information may be obtained in various schemes. For example, the image information may be obtained by the camera module 260 of the UAV 130, and may be received from the UAV 130. As another example, the image information may be received from a higher node, such as a server or the like. In this instance, the image information may be information associated with a satellite picture. As another example, the image information may be stored in advance in the electronic device 110.

The information for indicating the area where the UAV 130 is capable of flying may include one or more of data indicating a location point where the UAV 130 is located, data indicating the location of the area where the UAV 130 is capable of flying, data indicating the shape of the area where the UAV 130 is capable of flying, and data indicating the size of the area where the UAV 130 is capable of flying.

The information for indicating the area where the UAV 130 is capable of flying may be displayed using various formats. For example, the information for indicating the area where the UAV 130 is capable of flying may be displayed in a closed curve format in two-dimensions (2D) or three-dimensions (3D). As another example, the information for indicating the area where the UAV 130 is capable of flying may be displayed in a contour format. In other words, the information for indicating the area where the UAV 130 is capable of flying may be displayed in various schemes so that a user may recognize one or more of a location point where the UAV 130 is located, the location of the area where the UAV 130 is capable of flying, the shape of the area where the UAV 130 is capable of flying, and the size of the area where the UAV 130 is capable of flying.

As described above, the electronic device according to various embodiments of the present disclosure may determine the area where the UAV related to the electronic device is capable of flying, and may display the determined area in a manner of superimposing the same on the information indicating the region where the UAV is located, whereby a user can intuitively recognize the state of the UAV and the surrounding environment of the UAV. In other words, the electronic device according to various embodiments of the present disclosure may intuitively provide information related to the UAV, whereby the user may more efficiently control the UAV. Also, the electronic device according to various embodiments of the present disclosure may intuitively provide information related to the UAV, whereby the user may more reliably control the UAV.

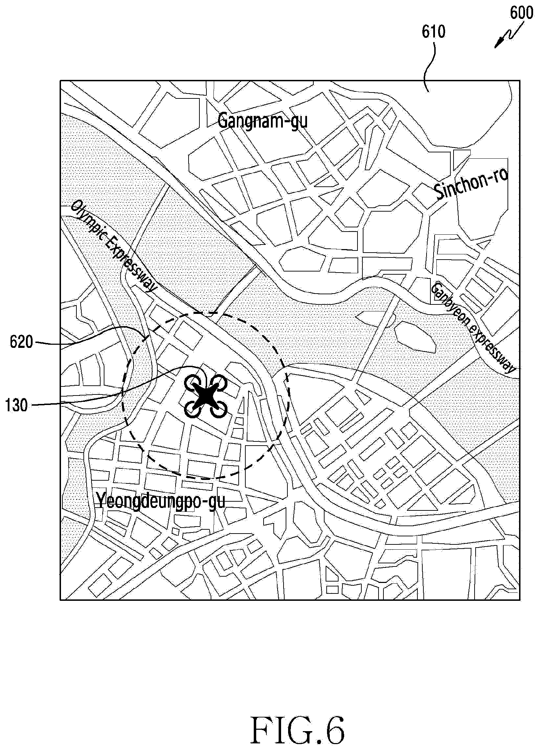

FIG. 6 is a diagram illustrating an example of a UI according to various embodiments of the present disclosure. The UI may be displayed in the electronic device 110.

Referring to FIG. 6, a UI 600 may include region information 610 indicating a region where the UAV 130 is located, and indication information 620 indicating an area where the UAV 130 is capable of flying.

The region information 610 may be displayed in a map information format, or may be displayed in an image information format.

In some embodiments, the region information 610 may specifically display a smaller region in response to an input for zooming in at least a part of a region, and may display a wider region in response to an input for zooming out at least a partial area. Zooming-in display or zooming-out display may be performed in connection with the movement of the UAV 130. For example, when the magnification of the region information 610 is greater than or equal to a reference value, the UAV 130 is fixedly displayed at a reference point, and the region information 610 may be displayed by being moved in a direction corresponding to the movement of the UAV 130. As another example, when the reduction rate of the region information 610 is greater than or equal to a reference value, the reference information 610 is fixedly displayed and the UAV 130 may be displayed by being moved in a direction corresponding to the movement of the UAV 130.

In other embodiments, the region information 610 may display information associated with a neighboring region (or information associated with another region) in response to an input for obtaining information associated with the neighboring region of the currently displayed region (or a region different from the currently display region). For example, when a user scrolls the UI 600 to the left (or to the right), the region information 610 may further display information associated with a region that is located in the right side of Sinchon-ro. In other embodiments, the region information 610 may provide information associated with a predetermined area in response to an input associated with the predetermined area of the UI 600. For example, when a user makes a touch around "Gangnam-gu" in the region information 610, the region information 610 may provide information associated with major facilities included in Gangnam-gu. As another embodiment, when the UAV 130 moves from point A to point B, the region information 610 may be displayed by replacing detailed information associated with the point A with detailed information associated with the point B.

The indication information 620 may be displayed using various methods for calling a user's attention. For example, the indication information 620 may be displayed in a closed curve indicating the maximum distance that the UAV 130 is capable of flying. As another example, the indication information 620 may be displayed in the shape of a marked-up figure.

In some embodiments, the indication information 620 may include data for providing information associated with an area that the indication information 620 covers. For example, the indication information 620 may include data for providing, to a user, information associated with the surroundings of a location point where the UAV 130 flies. The data may be displayed in characters or an image. When needed, the data may be output through a sound or a vibration.

The indication information 620 may be updated based on one or more of the operation (e.g., movement) of the UAV 130, a change in the state of the UAV 130, and a change in an environment where the UAV 130 is located. Also, the indication information 620 may be displayed in a different format based on one or more of the operation of the UAV 130, a change in the state of the UAV 130, and a change in the environment where the UAV 130 is located. For example, when the UAV 130 operates in an emergency, the indication information 620 may be displayed based on various effects for emphasizing the emergency situation (e.g., changing a color, marking up a displayed character, enlarging a displayed character or figure, changing brightness or transparency, or the like).

As described above, the UI displayed in the electronic device according to various embodiments of the present disclosure may display, to a user, information associated with a region where the UAV is located, information associated with a location point where the UAV is located, and information associated with an area where the UAV is capable of flying, whereby the user may more efficiently control the UAV.

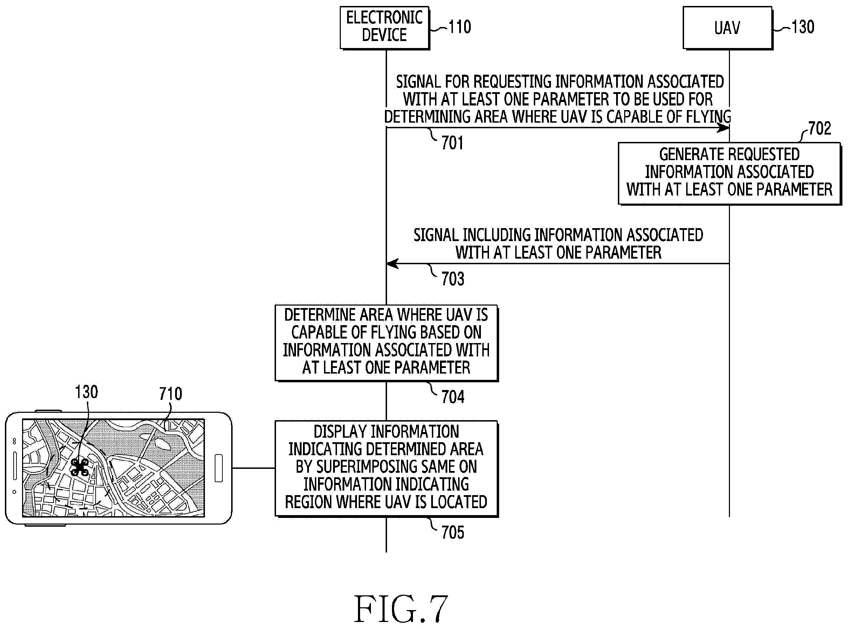

FIG. 7 is a diagram illustrating an example of a signal flow between an electronic device and a UAV according to various embodiments of the present disclosure. The signal flow may be performed by the electronic device 110 and the UAV 130 of FIGS. 1A and 1B.

Referring to FIG. 7, in operation 701, the electronic device 110 transmits, to the UAV 130, a signal for requesting information associated with at least one parameter to be used for determining an area where the UAV 130 is capable of flying. The at least one parameter may be the battery state of the UAV 130, the wind direction at a location point where the UAV 130 is located, the wind speed at a location point where the UAV 130 is located, and information indicating the distance between the UAV 130 and the electronic device 110. In some embodiments, the signal for requesting the information associated with the at least one parameter may be transmitted from the electronic device 110 to the UAV 130 by a predetermined period. In other embodiments, the signal for requesting the information associated with the at least one parameter may be transmitted from the electronic device 110 to the UAV 130 in response to the need of a user of the electronic device 110. In other embodiments, the signal for requesting the information associated with the at least one parameter may be transmitted as a response when the electronic device 110 operates in a predetermined state. The UAV 130 may receive the signal for requesting the information associated with the at least one parameter from the electronic device 110. In other embodiments, the signal for requesting the information associated with the at least one parameter may be transmitted as a response when the electronic device 110 executes (or initiates) an application related to the UAV 130.

The signal for requesting the information associated with the at least one parameter may be transmitted in various communication paths. For example, the signal for requesting the information associated with the at least one parameter may be transmitted through a direct communication path between the electronic device 110 and the UAV 130. As another example, the signal for requesting the information associated with the at least one parameter may be transmitted through an indirect communication path including a relay node (e.g., a relay or an eNodeB).

Unlike the example of FIG. 7, the electronic device 110 may transmit a signal for requesting the information associated with the at least one parameter to an external node, such as a server or the like.

In operation 702, the UAV 130 may generate the requested information associated with at least one parameter.

For example, a parameter to be used for determining an area where the UAV 130 is capable of flying (in other words, a parameter requested by the electronic device 110) is the battery state of the UAV 130, the UAV 130 may generate a value indicating the amount of charge remaining in the battery of the UAV 130 as the information associated with the at least one parameter. The value indicating the amount of charge remaining in the battery may be provided in various forms. For example, the value indicating the amount of charge remaining in the battery may be the value of an index among the indices respectively mapped to various amounts of charge remaining in the battery. As another example, the value indicating the amount of charge remaining in the battery may be a value indicating the ratio of the amount of charge remaining in the battery to the whole amount of charge in the battery, the absolute value of the amount of charge remaining in the battery, or a time value indicating the time expected to be taken until the battery is completely consumed.

As another example, when a parameter to be used for determining an area where the UAV 130 is capable of flying (in other words, a parameter requested by the electronic device 110) is the distance between the UAV 130 and the electronic device 110, the UAV 130 may generate a value indicating the distance between the UAV 130 and the electronic device 110 as the information associated with the at least one parameter. The value indicating the distance between the UAV 130 and the electronic device 110 may be provided in various forms. For example, the value indicating the distance between the UAV 130 and the electronic device 110 may be a reception power value of the signal of operation 701. The electronic device 110 may determine the distance between the electronic device 110 and the UAV 130 using a difference between the reception power value of the signal of operation 701 and a transmission power value of the signal. As another example, when the UAV 130 obtains information associated with the transmission power of the signal transmitted from the electronic device 110, the value indicating the distance between the UAV 130 and the electronic device 110 may be a difference between the transmission power of the signal and the reception power of the signal. As another example, the value indicating the distance between the UAV 130 and the electronic device 110 may be a received signal strength indicator (RSSI), a carrier to interference plus noise ratio (CINR), a signal to interference ratio (SINR), or the like associated with a signal transmitted or received between the UAV 130 and the electronic device 110.

As another example, when a parameter to be used for determining an area where the UAV 130 is capable of flying (in other words, a parameter requested by the electronic device 110) is the direction and/or speed of wind at a location point where the UAV 130 is located, the UAV 130 may generate a value indicating the direction of wind at a location point where the UAV 130 is located and/or a value indicating the speed of wind at a point where the UAV 130 is located, as the information associated with the at least one parameter. The value indicating the direction of wind at a location point where the UAV 130 is located and/or the value indicating the speed of wind at a location point where the UAV 130 is located may be provided in various forms. For example, the value indicating the direction (or speed) of wind at a location point where the UAV 130 is located may be a difference from a previously reported value indicating the direction (or speed) of wind. As another example, the value indicating the direction (or speed) of wind at a location point where the UAV 130 is located may be an absolute value that explicitly indicates the direction (or speed) of wind. As another example, the value indicating the direction (or speed) of wind at a location point where the UAV 130 is located may be an index to which the difference or the absolute value is mapped. As another example, the value indicating the direction (or speed) of wind at a location point where the UAV 130 is located may be a difference between weather information received from a server or the like and information detected by a sensor of the UAV 130 (i.e., information associated with the direction or speed of wind).

Unlike the example of FIG. 7, when the electronic device 110 transmits a signal for requesting the at least one parameter to a server or the like, a part or all of operation 702 may be performed by the server.

In operation 703, the UAV 130 may transmit a signal including the generated information associated with the at least one parameter. The signal including the information associated with the at least one parameter may be transmitted by a predetermined period. In this instance, the signal transmitted from the electronic device 110 in operation 701 may be a signal that indicates to or requests from the UAV 130 the periodic transmission of a signal including information associated with the at least one parameter. Also, the signal including the information associated with the at least one parameter may be transmitted as a response when the UAV 130 operates in a predetermined state. Also, the signal including the information associated with the at least one parameter may be transmitted in response to a request from the electronic device 110. The electronic device 110 may receive the signal including the information associated with the at least one parameter transmitted from the UAV 130.

The signal including the information associated with the at least one parameter may be transmitted in various communication paths. For example, the signal including the information associated with the at least one parameter may be transmitted through a direct communication path between the electronic device 110 and the UAV 130. As another example, the signal including the information associated with the at least one parameter may be transmitted through an indirect communication path including a relay node.

In operation 704, the electronic device 110 may determine an area where the UAV 130 is capable of flying based on the information associated with the at least one parameter. More particularly, based on the information associated with the at least one parameter, the electronic device 110 may determine one or more of the location of the area where the UAV 130 is capable of flying, the size of the area where the UAV 130 is capable of flying, and the shape of the area where the UAV 130 is capable of flying.

In operation 705, the electronic device 110 may display information for indicating the determined area in a manner of superimposing the same on the information indicating a region where the UAV 130 is located. For example, the electronic device 110 may display a UI 710 on a display unit of the electronic device 110. In some embodiments, the UI 710 may be displayed when a predetermined condition is satisfied. For example, the UI 710 may be displayed in response to the execution (or initiation) of an application related to the UAV 130 in the electronic device 110. In other embodiments, the UI 710 may be displayed in response to the transmission of a signal by the electronic device 110, such as the signal transmitted in operation 701. In other embodiments, the UI 710 may be displayed in response to an explicit input for displaying the UI 710.

As described above, communication between the electronic device and the UAV according to various embodiments may be configured through signals in various formats. Also, the communication between the electronic device and the UAV according to various embodiments may be configured, including various communication paths.

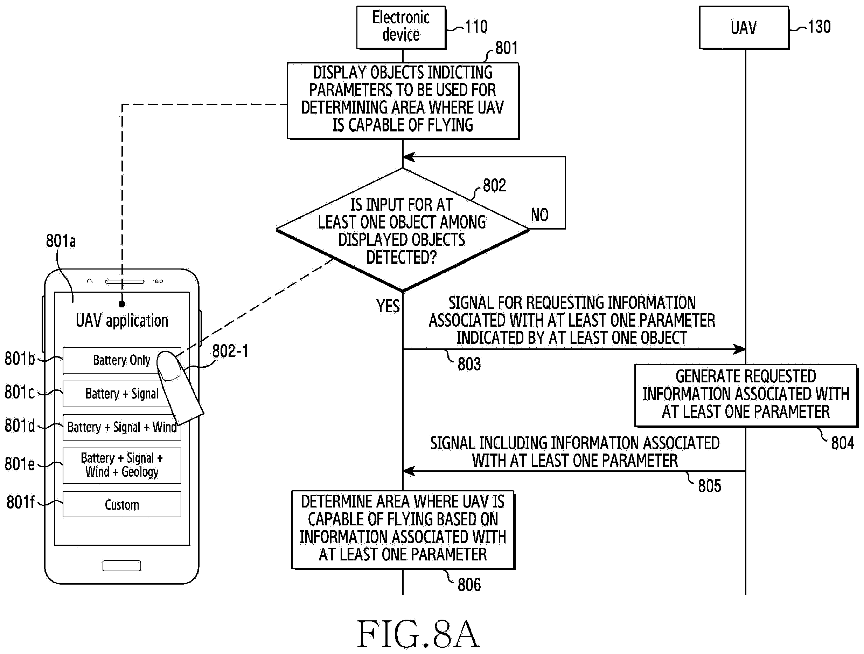

FIG. 8A is a diagram illustrating an example of a signal flow between an electronic device and a UAV for determining an area where the UAV is capable of flying according to various embodiments of the present disclosure.

Referring to FIG. 8A, the electronic device 110 may display objects (e.g., icons) indicating parameters to be used for determining an area where the UAV 130 is capable of flying in operation 801. The electronic device 110 may display a UI associated with an application related to the UAV 130, which is stored in the electronic device 110, in order to control the UAV 130 wirelessly connected to the electronic device 110. For example, the electronic device 110 may display a UI 801a.

In some embodiments, the UI 801a may be displayed every time that the application is executed. In other embodiments, the UI 801a may be displayed in response to the detection of an input for activating the setting of the application. In other embodiments, the UI 801a may be displayed by a predetermined period. In other embodiments, the UI 801a may be displayed when a designated condition is satisfied. For example, the designated condition may be a condition wherein a setting associated with the parameters to be used for determining the area where the UAV 130 is capable of flying is changed from a default setting or a previous setting. That is, the UI 801a may be displayed when the designated condition is satisfied, and the UI 801a may not be displayed when the designated condition is not satisfied (e.g., no change made in the default setting and previous setting). In other words, operation 801 may be omitted depending on various embodiments.

The UI may include objects indicating parameters to be used for determining the area where the UAV 130 is capable of flying. Each of the objects may be displayed for interaction with a user. Each of the objects may be an icon for activating at least one function of the electronic device 110. To this end, the objects may be respectively mapped to the parameters to be used for determining the area where the UAV is capable of flying. In other words, each of the objects may be used for requesting information associated with a parameter for a corresponding object. Also, each of the objects may be used for triggering requesting of information associated with a parameter for a corresponding object. Also, each of the objects may be used for selecting at least one of the parameters corresponding to the objects.

For example, the UI 801a may include an object 801b for requesting the UAV 130 to provide information associated with the battery state of the UAV 130 as the information associated with a parameter. Also, the UI 801a may include an object 801c for requesting the UAV 130 to provide information associated with the battery state of the UAV 130 and the reception signal strength (an RSSI) of the UAV 130 as the information associated with a parameter. Also, the UI 801a may include an object 801d for requesting the UAV 130 to provide information associated with the battery state of the UAV 130, the received signal strength of the UAV 130, and the speed and direction of wind at a location point where the UAV 130 is located, as the information associated with a parameter. Also, the UI 801a may include an object 801e for requesting the UAV 130 to provide information associated with the battery state of the UAV 130, the received signal strength of the UAV 130, the speed and direction of wind at a location point where the UAV 130 is located, and a topology or an obstacle around the UAV 130, as the information associated with a parameter. Also, the UI 801a may include an object 801f for requesting a server or the UAV 130 to provide information associated with at least one parameter determined (or selected or identified) by a user's selection or setting (i.e., custom).

In operation 802, the electronic device 110 may determine whether an input for at least one object is detected from among the displayed objects (e.g., the objects 801b to 801f). For example, the electronic device 110 may determine whether a user touch input on at least one object (e.g., the object 801b) is detected from among the objects 801b to object 801f.

When an input for at least one object is detected from among the displayed objects, the electronic device 110 may perform operation 803. For example, when an input 802-1 for the object 801b in the displayed UI 801a is detected, the electronic device 110 may perform operation 803.

Unlike the above, when an input for at least one object is not detected from among the displayed objects, the electronic device 110 may perform operation 802. In other words, when an input for at least one object is not detected from among the displayed objects, the electronic device 110 may continuously monitor whether an input for the objects is detected. In some embodiments, when an input for the objects is not detected during a predetermined period of time, the electronic device 110 may interrupt displaying the UI 801a, display another UI (and switching the UI 801a as a background), or change to an idle mode.

In operation 803, the electronic device 110 may transmit, to the UAV 130, a signal for requesting information associated with at least one parameter indicated by (or corresponding to) the at least one object. The signal for requesting the information associated with at least one parameter indicated by the at least one object may be used for indicating a parameter requested by the electronic device 110. Also, the signal for requesting the information associated with at least one parameter indicated by the at least one object may be used for instructing the electronic device 110 to transmit information associated with the at least one parameter by a predetermined period. The UAV 130 may receive the signal for requesting the information associated with the at least one parameter indicated by the at least one object.

Although it is illustrated that the electronic device 110 transmits the signal for requesting the information associated with the at least one parameter to the UAV 130 in operation 803, this is merely an example for illustrative purpose. The electronic device 110 may transmit the signal for requesting the information associated with the at least one parameter to another external device, such as a server or the like. In this instance, operations 804 and 805 may be performed by an external device that receives the signal for requesting the information associated with the at least one parameter.

In operation 804, the UAV 130 may generate the requested information associated with the at least one parameter. For example, in response to the reception of the signal for requesting the information associated with the at least one parameter indicated by the at least one object, the UAV 130 may generate information indicating the battery state of the UAV 130. As another example, in response to the reception of the signal for requesting the information associated with the at least one parameter indicated by the at least one object, the UAV 130 may measure the direction and the speed of wind at a location point where the UAV 130 is located. The UAV 130 may generate information associated with the at least one parameter based on information associated with the measured direction of wind and information associated with the measured speed of wind.

In operation 805, the UAV 130 may transmit a signal including the generated information associated with the at least one parameter. The electronic device 110 may receive the signal including the generated information associated with the at least one parameter.

In operation 806, the electronic device 110 may determine an area where the UAV 130 is capable of flying based on the information associated with the at least one parameter. For example, the electronic device 110 may determine the location of an area where the UAV 130 is capable of flying based on the location of the UAV 130, and may determine the shape and the size of the area where the UAV 130 is capable of flying based on the information associated with the at least one parameter.

As described above, the electronic device according to various embodiments of the present disclosure may provide, to a user, a UI including objects indicating parameters to be used for determining an area where the UAV is capable of flying, whereby the user may more efficiently control the UAV.

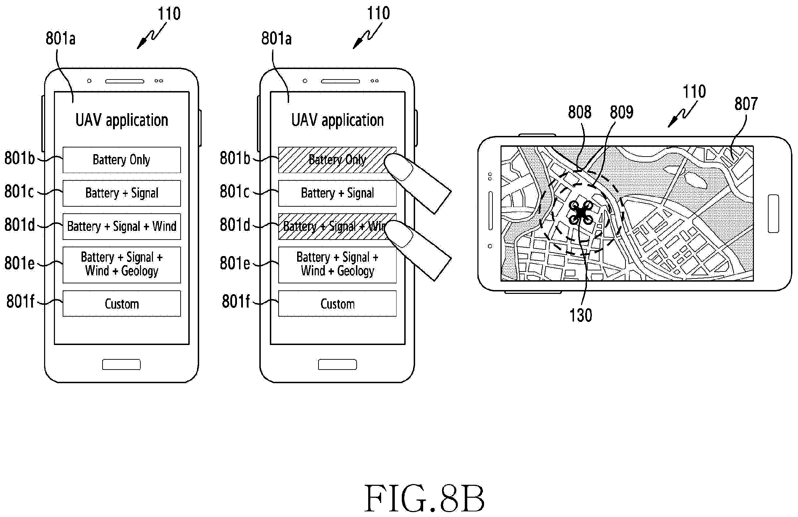

FIG. 8B is a diagram illustrating an example of a UI including objects for determining parameters according to various embodiments of the present disclosure. The UI may be displayed in the electronic device 110 of FIGS. 1A and 1B.

Referring to FIG. 8B, the UI 801a may include the object 801b corresponding to the battery state of the UAV 130, the object 801c corresponding to the battery state of the UAV 130 and the received signal strength of the UAV 130, the object 801d corresponding to the battery state of the UAV 130, the received signal strength of the UAV 130, the speed and the direction of wind at which the UAV 130 is located, the object 801e corresponding to the battery state of the UAV 130, the received signal strength of the UAV 130, the speed and direction of wind at which the UAV 130 is located, and information associated with a landmark or an obstacle existing around the UAV 130, and the object 801f corresponding to at least one parameter selected by a user.

The user may provide inputs for a plurality of objects among the objects 801b to 801f included in the UI 801a. For example, as illustrated in the UI 801a of FIG. 8B, the user may provide inputs for selecting the object 801b and the object 801d among the objects 801b to 801f. The electronic device 110 may detect the inputs for selecting the object 801b and the object 801d.

In response to the detection of the input, the electronic device 110 may determine a first area where the UAV 130 is capable of flying based on the information associated with the battery state of the UAV, which is a parameter corresponding to the object 801b. Also, in response to the detection of the input, the electronic device 110 may determine a second area where the UAV 130 is capable of flying based on the battery state of the UAV, the received signal strength of the UAV, and the information associated with the direction and speed of wind at a location point where the UAV is located, which are parameters corresponding to the object 801d. Since the first area and the second area are determined based on different parameters, the first area and the second area may have different sizes or different shapes. For example, since the second area is determined based on a larger number of parameters than the first area, the second area may have a smaller size than that of the first area.

Referring to FIG. 8B, the electronic device 110 may display a UI 807. The UI 807 may display a first area 808 determined based on the parameter corresponding to the object 801b and a second area 809 determined based on the parameters corresponding to the object 801d, in a manner of superimposing the first area 808 and the second area 809 on information indicating a region where the UAV 130 is located. The first area 808 and the second area 809 may be displayed to be distinguished by a user. For example, the first area 808 and the second area 809 may have different colors. The user may determine what to do for controlling the UAV 130 based on the first area 808 and the second area 809 displayed in the electronic device 110. Also, the user may estimate the distance between the electronic device 110 and the UAV 130 or the state (or quality) of a communication path between the electronic device 110 and the UAV 130 based on the first area 808 and the second area 809 displayed in the electronic device 110. Also, the user may estimate the wind speed and the wind direction at a location point where the UAV 130 is located based on the first area 808 and the second area 809 displayed in the electronic device 110.

As described above, the electronic device according to various embodiments of the present disclosure displays multiple areas determined based on different parameters, whereby the user may estimate (or determine) the state at a location point where the UAV is located. Furthermore, the electronic device according to various embodiments of the present disclosure may provide, to a user, multiple pieces of information determined based on various methods such that the user may determine a future flight route of the UAV.

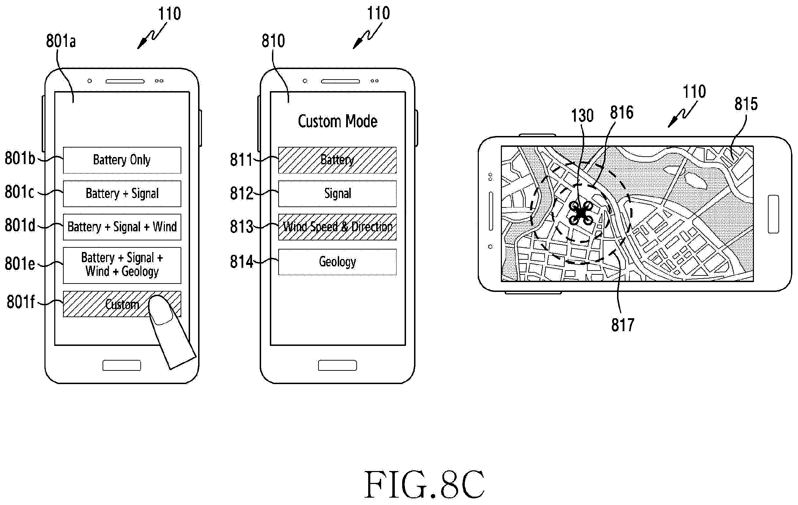

FIG. 8C is a diagram illustrating an example of a UI for determining a custom mode according to various embodiments of the present disclosure.

Referring to FIG. 8C, the electronic device 110 may display the UI 801a including objects 801b to 801f. A user may provide an input for the object 801f among the displayed objects 801b to 801f. The electronic device 110 may detect the input for the object 801f.

In response to the detection of the input for the object 801f, the electronic device 110 may display the UI 810 for a custom mode for setting at least one parameter corresponding to the object 801f. The UI 810 may include an object 811, an object 812, an object 813, and an object 814 respectively corresponding to candidate parameters, which may be set as at least one parameter corresponding to the object 801f.

The user may provide an input for selecting at least one of the objects 811 to 814. Particularly, the user may select one of the objects 811 to 814, or may select a plurality of objects among the objects 811 to 814. The electronic device 110 may detect an input for at least one object among the objects 811 to 814.

For example, as illustrated in FIG. 8C, the electronic device 110 may detect inputs for the object 811 and the object 813. In response to the detection of the inputs for the object 811 and the object 813, the electronic device 110 may determine the battery state of the UAV 130 and a wind speed and direction at a location point where the UAV 130 is located as at least one parameter corresponding to the object 801f. In other words, the custom mode may be a mode for determining an area where the UAV 130 is capable of flying based on information associated with the battery state of the UAV 130 and a wind speed and direction at a location point where the UAV 130 is located.

When the custom mode is completely set, the electronic device 110 may display a UI 815 when receiving an input for the object 801f included in the UI 801a. The UI 815 may include information indicating a region where the UAV 130 is located and an area 816 where the UAV 130 is capable of flying, which is displayed in a manner of being superimposed on the information indicating the region where the UAV 130 is located. The area 816 may be an area which is determined based on the battery state of the UAV 130 and the wind speed and direction at the location point where the UAV 130 is located, which are the parameters corresponding to the object 801f. The area 816 may have a smaller extent than that of an area 817 which is determined based on the battery state of the UAV 130. It is because the area 816 is determined based on a larger number of parameters than the number of parameters used when the area 817 is determined.

As described above, the electronic device according to various embodiments of the present disclosure may provide an object (i.e., an object designated for the custom mode) which allows adaptively determining at least one parameter corresponding to the object, thereby displaying an area determined based on various combinations of parameters. Furthermore, the electronic device may provide an object that allows adaptively determining at least one parameter corresponding to an object (i.e., an object designated for the custom mode), thereby displaying a UI which is appropriate for a user request or an environment where a UAV flies.

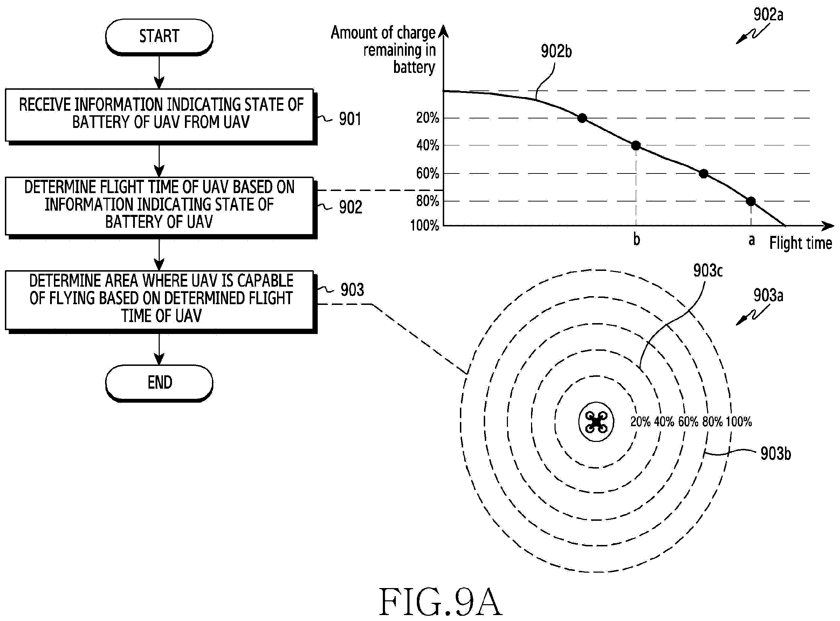

FIG. 9A is a diagram illustrating an example of an operation flow of an electronic device for determining an area where a UAV is capable of flying based on a battery state of the UAV according to various embodiments of the present disclosure. The operational flow may be performed by the electronic device 110 of FIGS. 1A and 1B.

Referring to FIG. 9A, the electronic device 110 receives information indicating the battery state of the UAV 130 from the UAV 130 in operation 901. The information indicating the battery state of the UAV 130 may be received together with information associated with at least one other parameter.

In operation 902, the electronic device 110 may determine the flight time (or the available flight time) of the UAV 130 based on the received information associated with the battery state of the UAV 130. For example, the electronic device 110 may store, in advance, a graph 902a or a table which serves a function as the graph 902a. The x-axis of the graph 902a indicates the flight time, and the y-axis of the graph 902a indicates the amount of charge remaining in the battery of the UAV 130. Also, a curve 902b of the graph 902a indicates the relationship between the flight time of the UAV 130 and the amount of charge remaining in the battery of the UAV 130, which is determined experimentally or mathematically (statistically). The electronic device 110 may determine the amount of charge remaining in the battery of the UAV 130 based on the received battery state of the UAV 130. The electronic device 110 may determine the flight time (or available flight time) of the UAV 130 corresponding to the amount of charge remaining in the battery of the UAV 130 in the curve 902b of the graph 902a.

In operation 903, the electronic device 110 may determine an area where the UAV 130 is capable of flying based on the determined flight time. For example, the electronic device 110 may store, in advance, a mapping table indicating the relationship between the flight time of the UAV 130 and the area where the UAV 130 is capable of flying, as shown in a conceptual diagram 903a. The center of each of the concentric circles of the conceptual diagram 903a may correspond to the current location of the UAV 130. Each of the concentric circles of the conceptual diagram 903a may indicate the area where the UAV 130 is capable of flying, and may correspond to the flight time of the UAV 130. For example, it is assumed that the flight time of the UAV 130 is a at a first time point (a time point when the amount of charge remaining in the battery of the UAV 130 is 80%), and the flight time of the UAV 130 is b at a second time point (a time point when the amount of charge remaining in the battery of UAV 130 is 40%), wherein a has a larger value than b. In this instance, the extent of a concentric circle 903b corresponding to a may be greater than the extent of a concentric circle 903c corresponding to b. In other words, the electronic device 110 may determine, as the area where the UAV 130 is capable of flying, an area corresponding to the flight time of the UAV 130, which is determined based on the mapping table that statistically indicates the conceptual diagram 903a.

In some embodiments, the area corresponding to the flight time of the UAV 130 may be determined based on the average speed of the UAV 130. In other embodiments, the area corresponding to the flight time of the UAV 130 may be determined based on the maximum speed of the UAV 130. In other embodiments, the area corresponding to the flight time of the UAV 130 may be determined based on the minimum speed of the UAV 130. In other embodiments, the area corresponding to the flight time of the UAV 130 may be determined based on a predetermined speed. In other words, the electronic device 110 may adaptively determine the extent of the area where the UAV 130 is capable of flying, based on an operation of the UAV 130.

As described above, the electronic device according to various embodiments of the present disclosure may determine information associated with the area where the UAV is capable of flying by using the relationship between the amount of charge in the battery and the flight time of the UAV. The electronic device may provide a user with information associated with the determined area where the UAV is capable of flying, whereby the user may more efficiently control the UAV.

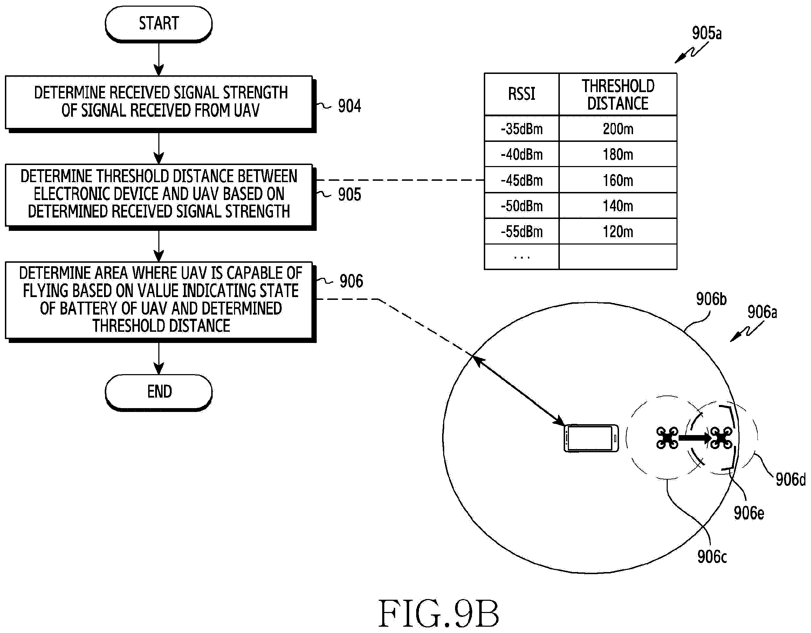

FIG. 9B is a diagram illustrating an example of an operation flow of an electronic device for determining an area where a UAV is capable of flying based on a received signal strength of a signal received from the UAV according to various embodiments of the present disclosure. The operational flow may be performed by the electronic device 110 of FIGS. 1A and 1B.

Referring to FIG. 9B, the electronic device 110 determines the received signal strength of a signal received from the UAV 130, in operation 904. The signal received from the UAV 130 may include information indicating the battery state of the UAV 130. The information indicating the battery state of the UAV 130 may be included in another signal, and may be received by the electronic device 110. In some embodiments, a signal received from the UAV 130 may include information associated with the size of transmission power of the UAV 130. In other embodiments, the size of transmission power of a signal received from the UAV 130 may be previously defined (or shared) between the UAV 130 and the electronic device 110.

In operation 905, the electronic device 110 may determine a threshold distance between the electronic device and the UAV 130 based on the determined received signal strength.

In some embodiments, the transmission power of a signal transmitted from the UAV 130 is shared with the electronic device 110, the electronic device 110 may determine the threshold distance between the electronic device 110 and the UAV 130 using a table indicating the relationship between an RSSI and a threshold distance, such as a table 905a. For example, when the determined received signal strength is - 45dBm, the electronic device 110 may determine the distance between the electronic device 110 and the UAV 130 as 160m.

In other embodiments, when a signal transmitted from the UAV 130 includes information associated with the transmission strength (or power) of the signal, the electronic device 110 may determine the distance between the electronic device 110 and the UAV 130 based on a difference between the transmission power and the determined received signal strength (or power). The relationship between the difference and the distance may be determined based on a table stored in advance in the electronic device 110, or may be determined by an equation stored in the electronic device 110.

In operation 906, the electronic device 110 may determine the area where the UAV 130 is capable of flying based on the determined threshold distance and information (or value) indicating the battery state of the UAV. For example, the electronic device 110 may determine the area where the UAV 130 is capable of flying using the scheme, such as a conceptual diagram 906a. Particularly, the electronic device 110 may calculate or determine a closed curve 906b indicting a threshold distance that the UAV 130 can be spaced away from the electronic device 110 at the maximum by maintaining an effective communication channel. Also, the electronic device 110 may calculate or determine a closed curve 906c indicating the area where the UAV 130 is capable of flying at a first time point based on the information indicating the battery state of the UAV 130. Also, the electronic device 110 may calculate or determine a closed curve 906d indicating the area where the UAV 130 is capable of flying at a second time point based on the information indicating the battery state of the UAV 130. At the first time point, the closed curve 906c is included in the closed curve 906b, whereby the electronic device 110 may determine the closed curve 906c as the area where the UAV 130 is capable of flying. Unlike the above, at the second time point, the closed curve 906d and the closed curve 906b partially overlap, whereby the electronic device 110 may determine an area where the inside of the closed curve 906d and the inside of the closed curve 906b overlap (or shares) from among the area of the closed curve 906d, as the area where the UAV 130 is capable of flying. This is because, when the UAV 130 flies beyond 906b, the transmission rate or reception rate of a signal transmitted from or received by the UAV 130 is decreased, whereby the UAV 130 may be disconnected from the communication with the electronic device 110 and/or the controller 120. Therefore, the electronic device 110 may determine a closed curve 906e indicating an area where the inside of the closed curve 906b and the inside of the closed curve 906d overlap as the area where the UAV 130 is capable of flying at the second point.

Although FIG. 9B illustrates an example of determining a threshold distance based on a received signal strength or a difference between a transmitted signal strength and a received signal strength, this is merely an example for illustrative purpose. Unlike the example of FIG. 9B, the electronic device 110 may determine the area where the UAV 130 is capable of flying using various factors (e.g., a CINR, an SINR, or the like) indicating a direct communication path between the electronic device 110 and the UAV 130.

As described above, the electronic device according to various embodiments may determine an area up to which the UAV may be spaced away from the electronic device or a controller related to the electronic device, based on the information associated with the distance between the electronic device and the UAV or information associated with a communication path between the electronic device and the UAV. The electronic device according to various embodiments of the present disclosure takes into consideration the areas, whereby a user may more reliably control the UAV.

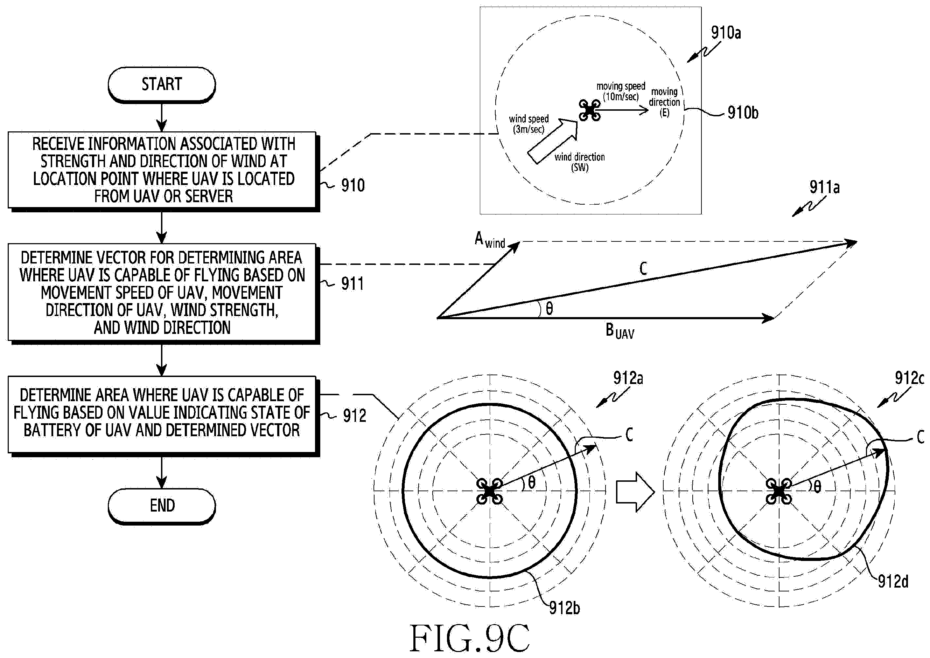

FIG. 9C is a diagram illustrating an example of an operation flow of an electronic device for determining an area where a UAV is capable of flying based on a wind speed and a wind direction at a location point where the UAV is located according to various embodiments of the present disclosure. The operational flow may be performed by the electronic device 110 of FIGS. 1A and 1B.

Referring to FIG. 9C, in operation 910, the electronic device 110 may receive information associated with the strength of wind (or wind speed) and the direction of wind (wind direction) at a location point where the UAV 130 is located, from the UAV 130 or a server. In some embodiments, the received information may further include information associated with the battery state of the UAV 130. In other embodiments, the received information may further include information associated with the location of the UAV 130. In other embodiments, the received information may further include information associated with the speed or direction of movement of the UAV 130. Also, in other embodiments, the information associated with the battery state of the UAV 130, the information associated with the location of the UAV 130, the information associated with the speed and direction of movement of the UAV 130 may not be included in the received information, but may be received through another procedure. For example, the information associated with the battery state of the UAV 130, the information associated with the location of the UAV 130, and the information associated the speed and direction of movement of the UAV 130 may be included in a signal that is periodically transmitted from the UAV 130 to the electronic device 110.

For example, as illustrated in the conceptual diagram 910a, the electronic device 110 may recognize that the movement direction of the UAV 130 is east (E), the movement speed of the UAV 130 is 10 m/s, the wind speed at a location point where the UAV 130 is located is 3 m/s, and the wind direction at the location point where the UAV 130 is located is southwest (SW), based on the information associated with the wind speed and direction at the location point where the UAV 130 is located, the information associated with the location of the UAV 130, and the information associated with the movement speed and movement direction of the UAV 130. Also, the electronic device 110 may determine the area where the UAV 130 is capable of flying as shown in the diagram 910b of the conceptual diagrams 910a, based on the information associated with the battery state of the UAV 130.

In operation 911, the electronic device 110 may determine a vector for determining the area where the UAV 130 is capable of flying, based on the movement speed of the UAV 130, the movement direction of the UAV 130, and the strength and direction of wind. The movement speed and the movement direction of the UAV 130 may be determined based on the information associated with the location of the UAV 130. In some embodiments, the electronic device 110 may periodically receive the information associated with the location of the UAV 130. In this instance, the electronic device 110 may determine the movement speed of the UAV 130 and the movement direction of the UAV 130 based on information associated with the location of the UAV 130 received in a previous reception period and information associated with the location of the UAV 130 received in the current reception period. In other embodiments, the electronic device 110 may interoperate with the controller 120. The electronic device 110 may receive, from the controller 120, information associated with a user input originated from the controller 120. The electronic device 110 may determine the movement speed of the UAV 130 and the movement direction of the UAV 130 based on the information associated with the user input originated from the controller 120.

The electronic device 110 may determine, generate, or calculate a vector related to the strength of wind or the direction of wind, such as **A**_{wind} of the conceptual diagram 911a, based on the information associated with the strength and direction of wind at a location point where the UAV 130 is located. Also, the electronic device 110 may determine, generate, or calculate a vector related to the movement speed of the UAV 130 and the movement direction of the UAV 130, such as **B**_{UAV} of the conceptual diagram 911a based on the determined movement speed of the UAV 130 and the determined movement direction of the UAV 130.

The electronic device 110 may determine, generate, or calculate a vector for determining the area where the UAV 130 is capable of flying, based on a vector related to the movement speed of the UAV 130 and the movement direction of the UAV 130, and a vector related to the strength of wind and the direction of wind. More particularly, the electronic device 110 may determine, generate, or calculate a vector, such as C of the conceptual diagram 911a by summing a vector related to the movement speed and the movement direction of the UAV 130 and a vector related to the strength of wind and the direction of wind.

In operation 912, the electronic device 110 may determine the area where the UAV 130 is capable of flying based on the determined vector and a value indicating the battery state of the UAV 130.

More particularly, the electronic device 110 may determine a first area where the UAV 130 is capable of flying, without taking into consideration the strength of wind and the direction of wind based on the battery state of the UAV 130. For example, the electronic device 110 may determine an area 912b of the conceptual diagram 912a (e.g., the diagram 910b of the conceptual diagram 910a depending on various embodiments), based on the information associated with the battery state of the UAV 130. Also, the electronic device 110 may determine a second area where the UAV 130 is capable of flying by taking into consideration the strength of wind and the direction of wind, based on the determined first area and the vector (e.g., C). For example, the electronic device 110 may determine the area 912d of the conceptual diagram 912c by summing the determined area 912b and the vector C of the determined conceptual diagram 911a. The second area (e.g., the area 912d) is an area determined by taking into consideration the strength and the direction of wind at a location point where the UAV 130 is located, whereby a user who receives information associated with the second area may effectively control the UAV 130. Also, the user may recognize the information associated with the direction and the strength of wind from an altitude (i.e., a location point where the UAV 130 is located), which has a height different from the altitude of the user.

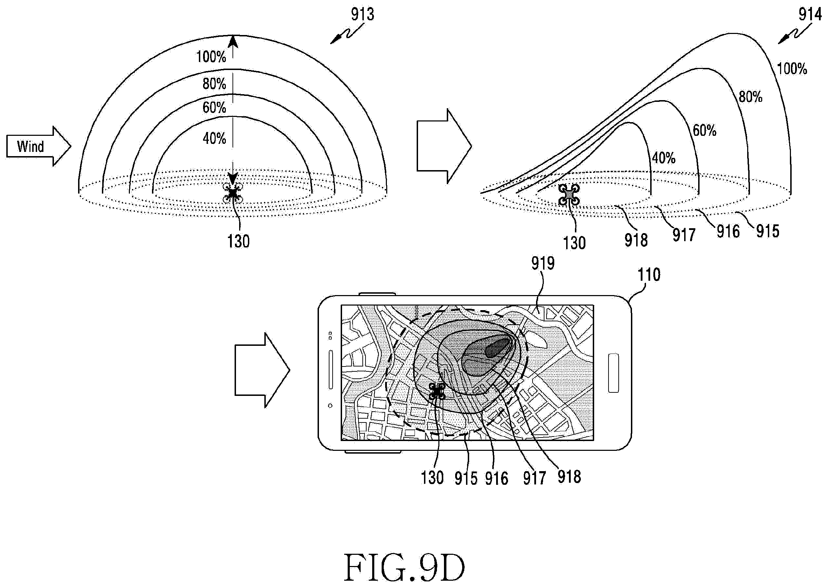

FIG. 9D is a diagram illustrating an example of a UI displaying a state of a UAV according to various embodiments of the present disclosure. The UI may be displayed in the electronic device 110 of FIGS. 1A and 1B.

Referring to FIG. 9D, the electronic device 110 may determine the area where the UAV 130 is capable of flying in three dimensions, as shown in the conceptual diagram 913. In other words, the electronic device 110 may determine the area where the UAV 130 is capable of flying in three dimensions, in addition to the area where the UAV 130 is capable of flying in two dimensions, based on the information associated with the location of the UAV 130 and the information associated with the battery state of the UAV 130. That is, the electronic device 110 may determine a threshold altitude at which the UAV 130 is capable of flying. For example, when the amount of charge remaining in the battery of the UAV 130 is 100%, a threshold altitude at which the UAV 130 is capable of flying may be greater than a threshold altitude at which the UAV 130 is capable of flying when the amount of charge remaining in the battery of the UAV 130 is 40%. Although the conceptual diagram 913 illustrates the case in which the consumption rate of the battery of the UAV 130 (e.g., the amount of charge in the battery consumed per time or the amount of charge in the battery consumed per distance) is regular as an altitude increases, this is merely an example for illustrative purpose. The electronic device 110 may generate another piece of data for a threshold altitude by taking into consideration the atmospheric pressure and the wind speed for each altitude, the amount of charge remaining in the battery, and the like. For example, when the consumption rate of the battery of the UAV 130 decreases as the UAV 130 rises to a higher altitude due to the atmospheric pressure which decreases as the altitude increases, the electronic device 110 may determine a threshold altitude at which the UAV 130 is capable of flying by taking into consideration the same.

The electronic device 110 may determine the area where the UAV 130 is capable of flying in three dimensions, as shown in the conceptual diagram 914, based on the area determined based on the battery state of the UAV 130 and information associated with the location of the UAV 130, and information associated with the wind direction and the wind speed at a location point where the UAV 130 is located. In the example of FIG. 9D, the UAV 130 may be affected by wind blowing rightward, and thus the area where the UAV 130 is capable of flying in three dimensions may be biased to one side, as shown in the conceptual diagram 914. In other words, the consumption rate of the battery when the UAV 130 changes the altitude in a direction corresponding to a wind direction may be smaller than the consumption rate of the battery when the UAV 130 changes the altitude in a direction that does not correspond to the wind direction.

The electronic device 110 may use contour lines or the like to display, in three dimensions, the area where the UAV 130 is capable of flying, which is determined by taking into consideration the wind direction, the wind speed, and the amount of charge remaining in the battery. For example, the electronic device 110 may display, as shown in a UI 919, the area where the UAV 130 is capable of flying by taking into consideration the wind direction, the wind speed, and the amount of charge remaining in the battery. As illustrated in the UI 919, the UAV 130 may rise high in a direction corresponding to the direction of wind at a location point where the UAV 130 is located, and may fly low in a direction that does not correspond to the direction of wind at the location point where the UAV 130 is located. Also, as illustrated in the UI 919, the UAV 130 may rise high as the amount of charge remaining in the battery of the UAV 130 is high. The electronic device 110 may display a UI such as the UI 919 such that the user may intuitively recognize the information. The user may intuitively recognize that the area where the UAV 130 is capable of flying is as shown in the conceptual diagram 914, through contour lines 915 to 918.

Although not illustrated in FIG. 9D, a UI 919 displayed in the electronic device 110 may further include information indicating the current battery state of the UAV 130 (e.g., an indicator, an icon, an image, or the like).

Also, unlike the embodiment of FIG. 9D, the electronic device 110 may display a single area where the UAV 130 is capable of flying, which is determined based on the current battery state of the UAV 130 and information associated with the wind direction and the wind speed at a location point where the UAV 130 is located. In this instance, a contour line displayed close to the location point where the UAV 130 is located indicates that the UAV is capable of rising to a higher altitude, and a contour line displayed away from the location point where the UAV 130 is located indicates that the UAV is capable of rising to a lower altitude.

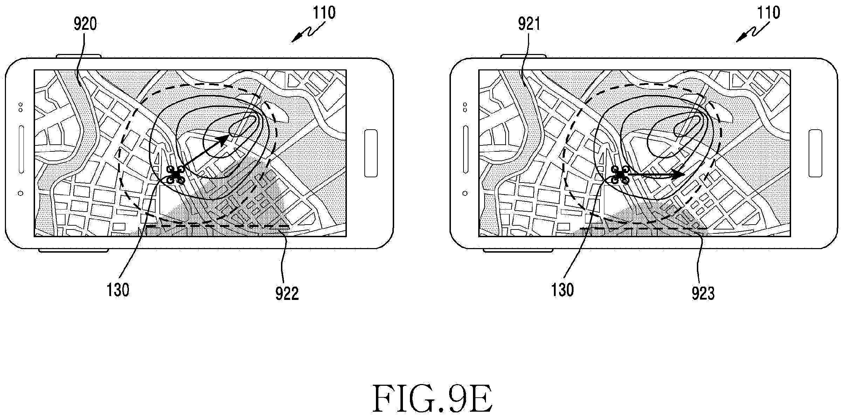

FIG. 9E is a diagram illustrating another example of a UI displaying a state of a UAV according to various embodiments of the present disclosure. The UI may be displayed in the electronic device 110 of FIGS. 1A and 1B.

Referring to FIG. 9E, the electronic device 110 may display UIs 920 and 921 which include information indicating an area where the UAV 130 is capable of flying, which is determined based on the battery state of the UAV 130 and a wind direction and speed at a location point where the UAV 130 is located, and information indicating an altitude at which the UAV 130 is capable of rising in the case of taking into consideration the direction of movement of the UAV 130. In other words, the electronic device 110 may further display information that takes into consideration the movement direction of the UAV 130, as shown in the UI 920 so that a user may more efficiently control the UAV 130. For example, when the movement direction of the UAV 130 corresponds to a wind direction at the location point where the UAV 130 is located, the electronic device 110 may display the UI 920 including threshold altitude information such as threshold altitude information 922. Also, when the movement direction of the UAV 130 does not correspond to a wind direction at the location point where the UAV 130 is located, the electronic device 110 may display the UI 921 including threshold altitude information such as threshold altitude information 923.

Although not illustrated in FIG. 9E, the UI 920 and the UI 921 displayed in the electronic device 110 may further include information indicating the current battery state of the UAV 130 (e.g., an indicator, an icon, an image, or the like).

As described above, the electronic device according to various embodiments of the present disclosure may display the area where the UAV is capable of flying by taking into consideration the information associated with the movement direction of the UAV, in addition to the battery state of the UAV and weather information at a location point where the UAV is located, so that a user may intuitively recognize the state of the UAV.

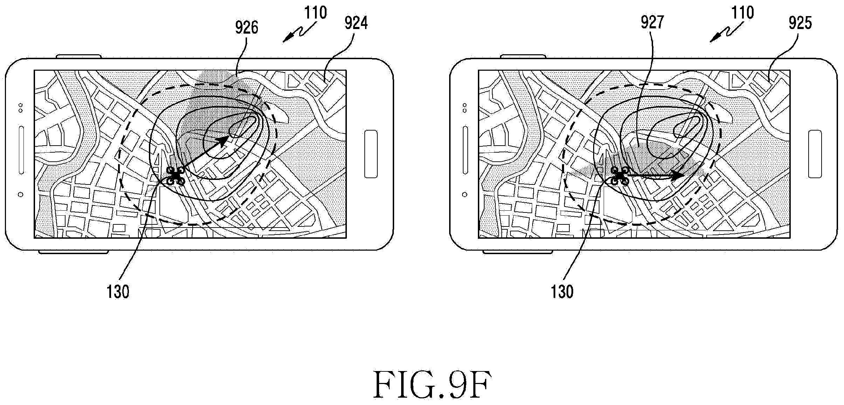

FIG. 9F is a diagram illustrating another example of a UI displaying a state of a UAV according to various embodiments of the present disclosure. The UI may be displayed in the electronic device 110 of FIGS. 1A and 1B.

FIG. 9F may be an example of differently displaying information that takes into consideration the movement direction of the UAV 130 of FIG. 9E.

Referring to FIG. 9F, the electronic device 110 may display a UI 924. The UI 924 may include information indicating an area which takes into consideration the battery state of the UAV 130 and weather information at a location point where the UAV 130 is located, and information indicating an area which is determined by further taking into consideration of the movement direction of the UAV 130. Unlike the UI 920 and the UI 921 of FIG. 9E, the UI 924 may display a threshold altitude 926, which is determined by taking into consideration the movement direction of the UAV 130 at a location corresponding to the movement direction of the UAV 130.

When the movement direction of the UAV 130 is changed, the electronic device 110 may display a UI 925. The UI 925 may include information indicating an area which takes into consideration the battery state of the UAV 130 and weather information at a location point where the UAV 130 is located, and information indicating an area which is determined by further taking into consideration of the movement direction of the UAV 130. Unlike the UI 920 and the UI 921 of FIG. 9E, the UI 925 may display a threshold altitude 927, which is determined by taking into consideration the movement direction of the UAV 130 at a location corresponding to the movement direction of the UAV 130.

Unlike the UAV 130 displayed in the UI 925, the UAV 130 displayed in the UI 924 moves in a direction corresponding to a wind direction at a location point where the UAV 130 is located, whereby the threshold altitude 926 indicates that the UAV 130 is capable of rising to a higher altitude than the threshold altitude 927. Also, each of the threshold altitude 926 and the threshold altitude 927 may indicate the maximum movement distance and the maximum rise distance based on the amount of charge remaining in the battery of the UAV 130.

As described above, the electronic device according to various embodiments of the present disclosure may provide a display mode including various options so that a user is capable of determining the state of the UAV in various aspects.

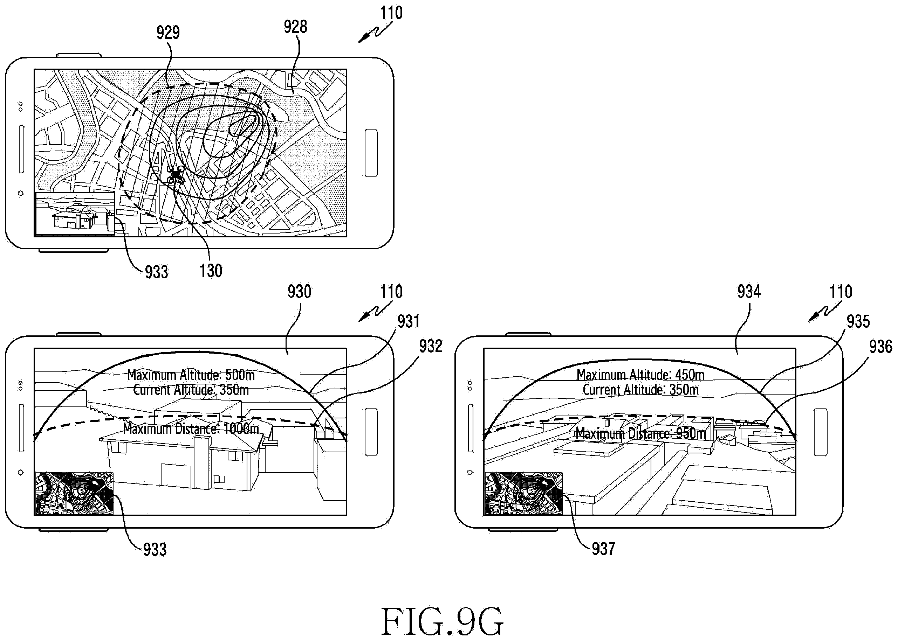

FIG. 9G is a diagram illustrating another example of a UI displaying a state of a UAV according to various embodiments of the present disclosure. The UI may be displayed in the electronic device 110 of FIGS. 1A and 1B.

Referring to FIG. 9G, the electronic device 110 may display a UI 928. The UI 928 may display information 929 indicating an area where the UAV 130 is capable of flying and an object 933 including an image captured at a point of view (in other words, at a first person view (FPV)) of the UAV 130, in a manner of superimposing them on information indicating a region where the UAV 130 is located. The object 933 may be used for displaying, in a reduced size, the image captured at the point of view of the UAV 130. Also, the object 933 may be used for switching main information included in the UI 928 from the information indicating the region where the UAV 130 is located to the image captured at the point of view of the UAV 130. Also, the object 933 may be used for switching the information displayed in a reduced size in the object 933, from the image captured at the point of view of the UAV 130 to the information indicating the region where the UAV 130 is located.

For example, the electronic device 110 may switch main information displayed in a UI, such as a UI 930, from information indicating the region where the UAV 130 is located to an image captured at the point of view of the UAV 130, in response to the detection of an input for the object 933. When the main information is switched to the image captured at the point of view of the UAV 130, the electronic device 110 may provide information associated with the current altitude of the UAV 130, information associated with the maximum distance that the UAV 130 is capable of moving, and information associated with a maximum altitude to which the UAV 130 is capable of rising, so as to provide guidance to the user. The information associated with the current altitude may be determined based on the current location of the UAV 130. The information associated with the maximum distance that the UAV 130 is capable of moving and the information associated with a maximum altitude to which the UAV 130 is capable of rising may be determined based on at least one parameter according to various embodiments of the present disclosure (e.g., the battery state of the UAV 130, the wind direction and speed at a location point where the UAV 130 is capable of flying, the received signal strength of the UAV 130, the received signal strength of the electronic device 110, the distance between the UAV 130 and the electronic device, and the like). For example, the UI 930 may include a line 931 for visually indicating information associated with a maximum altitude to which the UAV 130 is capable of rising, and a line 932 for visually indicating information associated with a maximum distance that the UAV 130 is capable of moving. Also, the UI 930 may further include a character indicating the current altitude of the UAV 130.

When the UAV 130 flies during a predetermined period of time, charge of the battery of the UAV 130 may be reduced. Also, the state of an area where the UAV 130 flies may change over time. In this instance, the electronic device 110 may provide, to a user, information indicating that a state related to the UAV 130 is changed. For example, the electronic device 110 may display a UI 934 indicating that the state related to the UAV 130 is changed. The UI 934 may include character information and a line 935 for indicating that the maximum rise altitude of the UAV 130 is decreased from 500m to 450m due to various factors. Also, the UI 934 may include character information and a line 936 for indicating that the maximum movement distance of the UAV 130 is decreased from 1000m to 950m due to various factors. Also, the UI 934 may include image information 937 which is obtained by the UAV 130 at the current point in time.

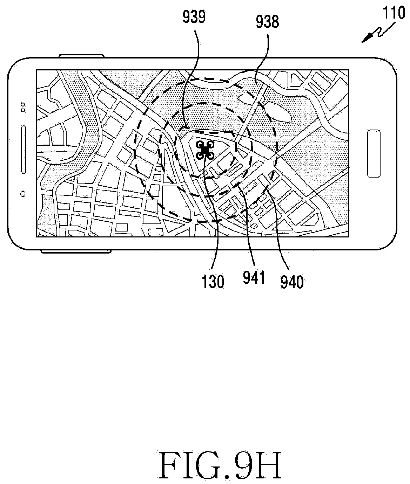

FIG. 9H is a diagram illustrating another example of a UI displaying a state of a UAV according to various embodiments of the present disclosure. The UI may be displayed in the electronic device 110 of FIGS. 1A and 1B.

Referring to FIG. 9H, the electronic device 110 may determine an area where the UAV 130 is capable of flying by taking into consideration factors that may restrict the flight of the UAV 130. For example, the electronic device 110 may determine the area where the UAV 130 is capable of flying based on obstacle information received from a server, the UAV 130, or the like (e.g., information indicating that a tall building exists in front of the UAV 130, information indicating that a river or the like exists around the UAV 130, information indicating that a region where the flight of the UAV 130 is legally restricted exists around the UAV 130). For example, the electronic device 110 may display a first area 940 where the UAV 130 is capable of flying, which is determined based on the battery state of the UAV 130, and a second area 941 where the UAV 130 is capable of flying, which is determined based on the battery state of the UAV 130 and the received signal strength of the UAV 130. Furthermore, the electronic device 110 may display a UI 938 including a third area 939 in which the UAV 130 is capable of flying, which is determined based on the obstacle information, the battery state of the UAV 130, the wind direction and speed at a location point where the UAV 130 is located, and the received signal strength of the UAV 130. The third area 939 may display the area where the UAV 130 is capable of flying by excluding an area where the flight of the UAV 130 is restricted since a river exists. In other words, the electronic device 110 may display the area where the UAV 130 is capable of flying by taking into consideration factors that may restrict the flight of the UAV 130, so that the user may more safely control the UAV 130.

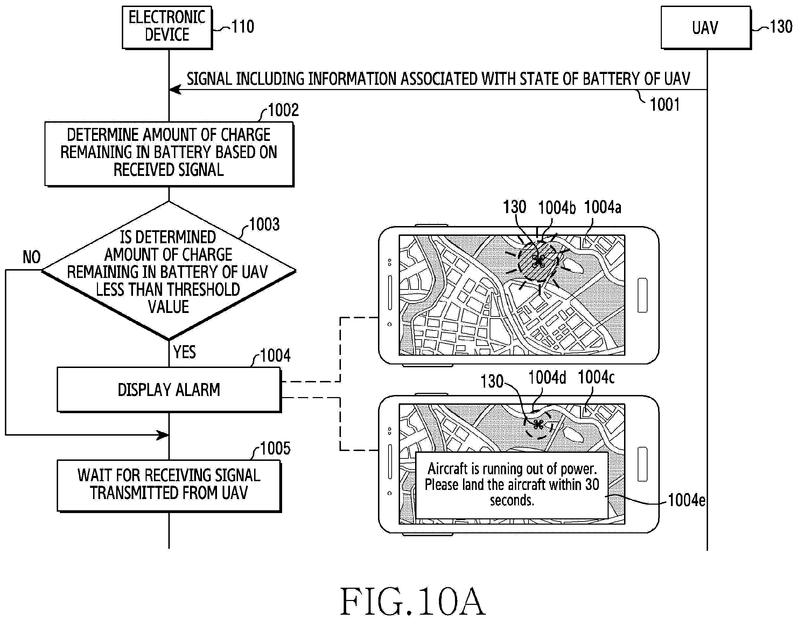

FIG. 10A is a diagram illustrating an example of a signal flow between an electronic device and a UAV for displaying an alarm associated with a UAV according to various embodiments of the present disclosure. The signal flow may be originated by the electronic device 110 and the UAV 130 of FIG. 1.

Referring to FIG. 10A, in operation 1001, the UAV 130 may transmit a signal including information associated with the battery state of the UAV 130 to the electronic device 110. In some embodiments, the signal including the information associated with the battery state of the UAV 130 may be periodically transmitted to the electronic device 110. In other embodiments, the signal including the information associated with the battery state of the UAV 130 may be transmitted to the electronic device 110 in response to a request from the electronic device 110. The electronic device 110 may receive the signal including the information associated with the battery state of the UAV 130 from the UAV 130.

In operation 1002, the electronic device 110 may determine the amount of charge remaining in the battery of the UAV 130 based on the received signal.

In operation 1003, the electronic device 110 may determine whether the amount of charge remaining in the battery of the UAV 130 is smaller than a threshold value. The threshold value may be used to indicate an alarm which expresses that the battery state of the UAV 130 is close to a discharge state. In some embodiments, the threshold value may be variously set. For example, the threshold value may include a first threshold value for indicating that the battery state of the UAV 130 is close to a discharge state but flight is still available, and a second threshold value for indicating that the battery state of the UAV 130 is close to a discharge state and the operation of the UAV 130 will stop soon. When the determined amount of charge remaining in the battery of the UAV 130 is not less than the threshold value (i.e., greater than or equal to the threshold value), the electronic device 110 may perform operation 1005. Unlike the above, when the determined amount of charge remaining in the battery of the UAV 130 is less than the threshold value, the electronic device 110 may perform operation 1004.

In operation 1004, the electronic device 110 may display an alarm indicating to the user that the battery state of the UAV 130 is close to a discharge state. The alarm may be displayed in various schemes.

In some embodiments, the alarm may be displayed to the user through a method of emphasizing information indicating an area where the UAV 130 is capable of flying, such as an area 1004b included in a UI 1004a. In other embodiments, such as an area 1004d and a notification message 1004e included in a UI 1004c, the alarm may be provided to the user through a method of displaying graphic information indicating that an area where the UAV 130 is capable of flying is set to be small, and displaying guidance written in characters in association with controlling the UAV. In other embodiments, the alarm may be provided to the user through a method of combining the UI 1004a and a UI 1004e. In other embodiments, the alarm may be provided to the user through a method of outputting a sound or an indicator (haptics or the like) indicating that the battery state of the UAV 130 is close to a discharge state, by using the output unit 450 or the like of the electronic device 110.

In operation 1005, the electronic device 110 may wait for reception from the UAV 130. The electronic device 110 may determine that the battery state of the UAV 130 is greater than or equal to a threshold value through operation 1003, whereby the electronic device 110 may perform operations (e.g., a default operation or the like) for the UAV 130 without performing a separate operation to call a user's attention to the battery state of the UAV 130.

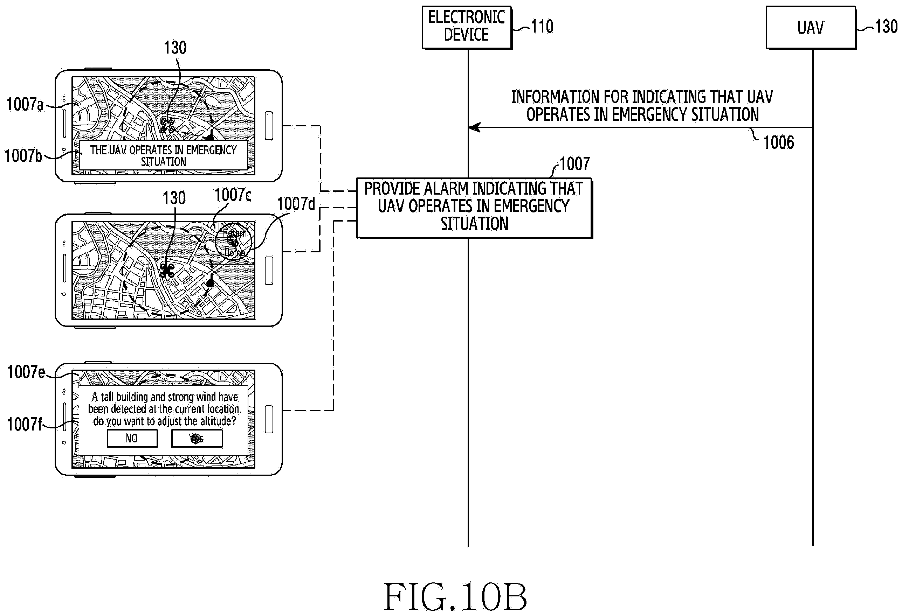

FIG. 10B is a diagram illustrating another example of a signal flow between an electronic device and a UAV for displaying an alarm associated with a UAV according to various embodiments of the present disclosure. The signal flow may be performed by the electronic device 110 and the UAV 130 of FIGS. 1A and 1B.

Referring to FIG. 10B, in operation 1006, the UAV 130 may transmit, to the electronic device 110, information indicating that the UAV 130 operates in an emergency situation. The emergency situation may indicate a situation in which the UAV 130 is not capable of operating in the normal state. For example, when a strong wind blows at a location point where the UAV 130 is located, the UAV 130 may transmit, to the electronic device 110, information indicating that the UAV 130 operates in an emergency situation. In other embodiments, when a part of the main body of the UAV 130 is broken or a part of the propeller of the UAV 130 is broken, the UAV 130 may transmit, to the electronic device 110, information indicating that the UAV 130 operates in an emergency situation. In some embodiments, the fact that the UAV 130 operates in an emergency situation may be detected by the sensor module 230 included in the UAV 130.

In operation 1007, the electronic device 110 may provide an alarm indicating that the UAV 130 operates in an emergency situation. For example, the electronic device 110 may display a UI 1007a including a character notification 1007b indicating that the UAV 130 operates in an emergency state. In other embodiments, in order to indicate that the UAV 130 operates in an emergency situation, the electronic device 110 may emphatically display a UI 1007c including an object (return to home) 1007d for returning the UAV 130 to a user. The object 1007d used for returning the UAV 130 to the user may be a default object displayed in an application for controlling the UAV 130, or may be an object displayed based on a user setting. As another example, the electronic device 110 may display a UI 1007e indicating that the UAV 130 operates in an emergency situation and including a characteristic notification 1007f for providing guidance used for a user to efficiently control the UAV 130.

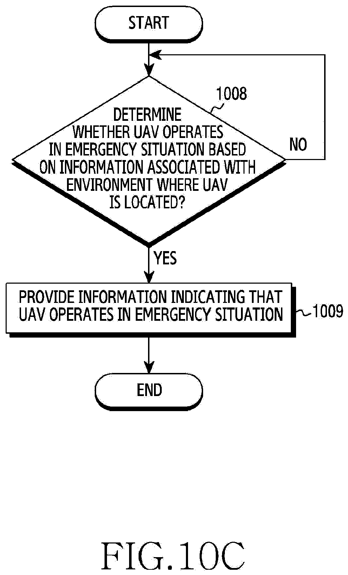

FIG. 10C is a diagram illustrating an example of an operation flow of an electronic device for displaying an alarm associated with a UAV according to various embodiments of the present disclosure. The operational flow may be performed by the electronic device 110 of FIGS. 1A and 1B.

Referring to FIG. 10C, in operation 1008, the electronic device 110 may determine whether the UAV 130 operates in an emergency situation based on information associated with an environment where the UAV 130 is located. In some embodiments, the information associated with the environment where the UAV 130 is located may be detected by the sensor module 230 of the UAV 130, and may be transmitted from the UAV 130. For example, the information associated with the environment where the UAV 130 is located may include data associated with a wind speed measured by the UAV 130 at a location point where the UAV 130 is located. In other embodiments, the information associated with the environment where the UAV 130 is located may be information transmitted from a server, such as a server for providing weather information, a server for providing news information, or the like. For example, the information associated with the environment where the UAV 130 is located may include weather data provided from a server, and news data provided from a server.

When it is determined that the UAV 130 does not operate in an emergency situation, the electronic device 110 may continuously monitor whether the UAV 130 operates in an emergency situation. In other words, the electronic device 110 may repeatedly perform operation 1008 by a predetermined period.

Unlike the above, when it is determined that the UAV 130 operates in an emergency situation, the electronic device 110 may provide a user with information for indicating that the UAV 130 operates in an emergency situation in operation 1009. For example, the electronic device 110 may provide an alarm for alerting a user's attention by displaying the alarm on the display unit 440 of the electronic device 110 or providing a sound signal, a vibration, or the like through the outputting unit 450 of the electronic device 110.

As described above, the electronic device according to various embodiments of the present disclosure may determine whether the UAV operates in an emergency situation based on information provided from a server or the UAV. Also, when the UAV operates in an emergency situation, the electronic device may provide an alarm to a user so that the user takes an action for the emergency situation.

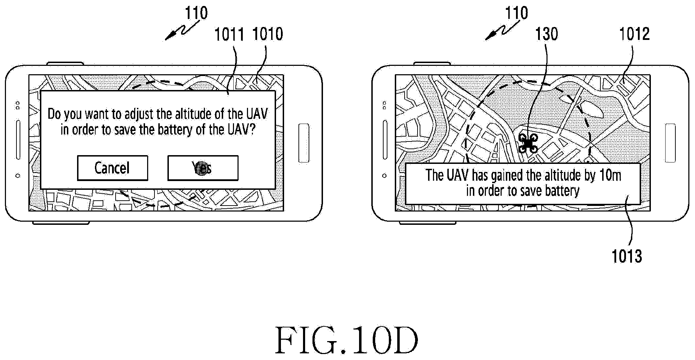

FIG. 10D is a diagram illustrating an example of a UI that provides guidance associated with controlling a UAV according to various embodiments of the present disclosure. The UI may be displayed in the electronic device 110 of FIGS. 1A and 1B.

Referring to FIG. 10D, the electronic device 110 may display a UI 1010 including a character notification message 1011 that provides guidance associated with controlling the UAV 130. In some embodiments, the character notification message 1011 may be displayed in response to a determination by the electronic device 110 indicating that the battery state of the UAV 130 reaches a level that is less than a threshold value. In other embodiments, the character notification message 1011 may be displayed in response to a determination by the electronic device 110 indicating that a variation in the battery of the UAV 130 is greater than or equal to a threshold value. In other embodiments, the character notification message 1011 may be displayed in response to a determination by the electronic device 110 indicating that the UAV 130 performs a task which is a little affected by the altitude. In other embodiments, the character notification message 1011 may be displayed based on information received from a server or the UAV 130.

The character notification message 1011 may include an object for inputting (or indicating), to the electronic device 110, information indicating that the guidance is accepted (or Yes) and an object for inputting (or indicating), to the electronic device 110, information indicating that the guidance is cancelled (No). Upon detection of the input for the object for inputting, to the electronic device 110, information indicating that the guidance is accepted, the electronic device 110 may display a UI 1012 including a character notification message 1013 in order to display the result of the operation of the UAV 130 performed based on the guidance. Controlling the UAV 130 based on the guidance may be performed in various methods. In some embodiments (the case in which the controller 120 is an independent entity from the electronic device 110), the electronic device 110 may transmit, to the controller 120, an operation control command for the UAV 130, which corresponds to the displayed character notification message 1011. The controller 120 that receives the operation control command may transmit, to the UAV 130, a signal processed based on the operation control command or a signal including the operation control command, whereby the UAV 130 may perform an operation corresponding to the character notification message 1011. In other embodiments, the electronic device 110 may directly transmit, to the UAV 130, a signal including the operation control command for the UAV 130, which corresponds to the displayed character notification message 1011.

As described above, the electronic device according to various embodiments of the present disclosure may provide, to a user, guidance information for controlling the UAV, whereby the user may more efficiently control the UAV.

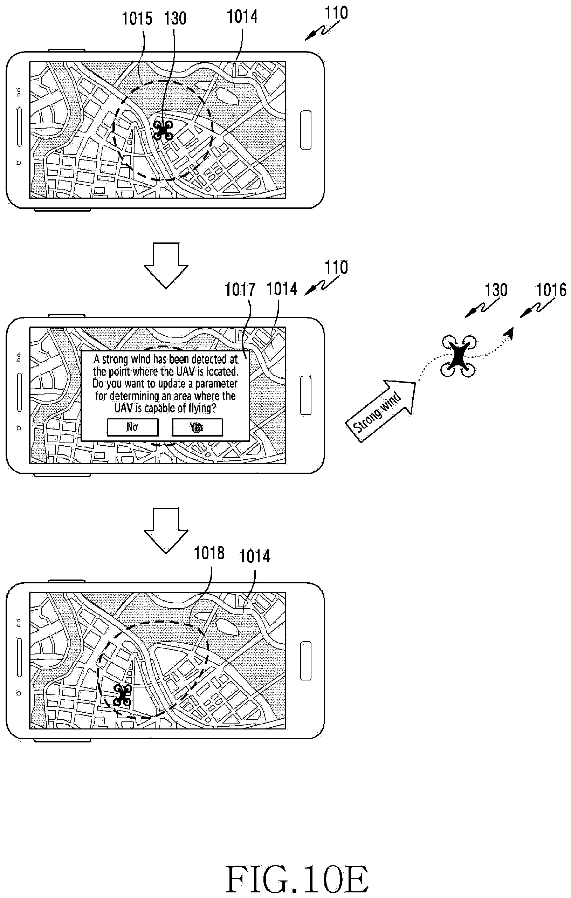

FIG. 10E is a diagram illustrating an example of another UI that provides guidance associated with controlling a UAV according to various embodiments of the present disclosure.

Referring to FIG. 10E, the electronic device 110 may display a UI 1014 including a first area 1015 for indicating an area where the UAV 130 is capable of flying, in a manner of superimposing the same on region information indicating a region where the UAV 130 is located. The first area 1015 may be an area determined based on the battery state of the UAV 130.

For example, as shown in a conceptual diagram 1016, when strong wind blows at a location point where the UAV 130 is located, a user, unlike the UAV 130, may not recognize that strong wind blows at the location point where the UAV 130 is located since the user is located away from the UAV 130. To overcome the above drawback, the UAV 130 may transmit, to the electronic device 110, information indicating that strong wind blows at the location point where the UAV 130 is located. In some embodiments, the information indicating that the strong wind blows may be transmitted from the UAV 130 when wind blows at a wind speed greater than or equal to a reference value. In other embodiments, the information indicating that strong wind blows may be included in a message which is periodically transmitted from the UAV 130 to the electronic device 110.

The electronic device 110 may display the UI 1014 including a notification message 1017 for updating a parameter which is used for determining an area where the UAV 130 is capable of flying, in order to report the state of the UAV 130 to a user based on the information received from the UAV 130. The notification message 1017 may include an object for inputting (or indicating), to the electronic device 110, information indicating that the update is accepted (or Yes) and an object for inputting (or indicating), to the electronic device 110, information indicating that the update is cancelled (No).

When an input for the object indicating that the update is not accepted is received from a user, the electronic device 110 may interrupt displaying the notification message 1017. Unlike the above, when an input for the object indicating that the update is accepted is received from a user, the electronic device 110 may interrupt displaying the notification message 1017, and may display, in the UI 1014, a second area 1018 where the UAV 130 is capable of flying, which is determined based on a wind speed and direction at a location point where the UAV 130 is located and the battery state of the UAV 130.

As described above, when an event happens to a currently flying UAV, the electronic device according to various embodiments of the present disclosure may provide a user with a notification message inquiring about whether to display an area which is determined by taking into consideration the event. Also, by updating a parameter for determining an area where the UAV is capable of flying based on an input associated with the notification message, the electronic device may adaptively act to the event which has happened to the UAV. In other words, the electronic device provides information associated with the UAV to the user located away from the UAV, whereby the user may more efficiently control the UAV.

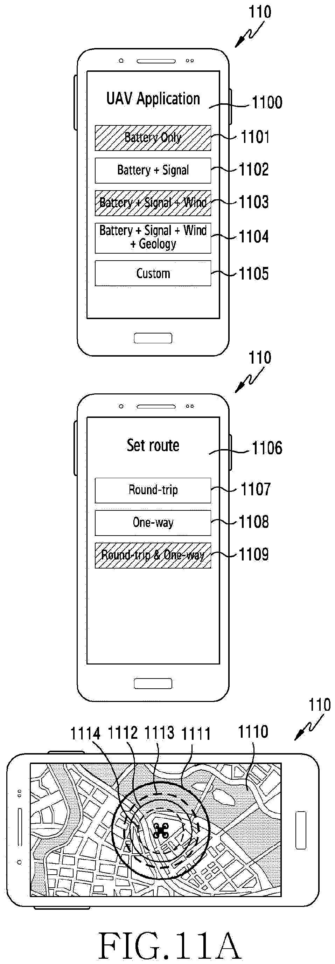

FIG. 11A is a diagram illustrating an example of a UI displaying a state of a UAV based on a route of the UAV according to various embodiments of the present disclosure. The UI may be displayed in the electronic device 110 of FIGS. 1A and 1B.

Referring to FIG. 11A, the electronic device 110 may display a UI 1100 which is associated with an application for the UAV 130. The UI 1100 may include objects (e.g., an object 1101, an object 1102, an object 1103, an object 1104, and an object 1105) corresponding to various parameters used for determining an area where the UAV 130 is capable of flying. The electronic device 110 may receive, from a user, an input for at least one object among the displayed objects. For example, the electronic device 110 may receive inputs for the object 1101 and object 1103 among the displayed objects. Based on the detection (reception) of the inputs for the object 1101 and the object 1103, the electronic device 110 may display a UI 1106. The UI 1106 may be used for the electronic device 110 to recognize the panned user route of the UAV 130. For example, when the user plans a one-way flight since the planned route of the UAV 130 includes a charging station (or a relay station), the UAV 130 does not need to take into consideration the amount of charge in the battery to be consumed for return and thus the flight distance may be longer than that of round-trip flight. As another example, when the user plans a round-trip flight, the UAV 130 may be restricted to a shorter flight distance than that of one-way flight since the UAV 130 needs to take into consideration the amount of charge in the battery to be consumed for return. To cover the factors, the electronic device 110 may display the UI 1106.

The UI 1106 may be displayed by various triggering conditions. For example, as shown in an example of FIG. 11A, the UI 1106 may be displayed in response to the detection of an input for at least one object among the objects included in the UI 1100. As another example, the UI 1106 may be displayed in response to the execution of an application related to the UAV 130. As another example, the UI 1106 may be displayed in response to the detection of an input for a predetermined object in a UI. As another example, the UI 1106 may be displayed for predetermined period.

The UI 1106 may include an object 1107 for displaying an area where the UAV 130 is capable of flying when the UAV 130 performs a round-trip flight, an object 1108 for displaying an area where the UAV 130 is capable of flying when the UAV 130 performs a one-way flight, and an object 1109 for displaying both an area where the UAV 130 is capable of flying in the case of a round-trip flight and an area where the UAV 130 is capable of flying in the case of a one-way flight.

For example, when the electronic device 110 detects an input for the object 1107 (e.g., when a user plans a round-trip flight), the electronic device 110 may display a UI 1110 including a round-trip flight area 1112 which is determined based on the battery state of the UAV 130, and a round-trip flight area 1114 which is determined based on the battery state of the UAV 130, the received signal strength of the UAV 130, and a wind speed and direction at a location point where the UAV 130 is located. As another example, when the electronic device 110 detects an input for the object 1108 (e.g., when a user plans a one-way flight), the electronic device 110 may display the UI 1110 including a one-way flight area 1111 which is determined based on the battery state of the UAV 130, and a one-way flight area 1113 which is determined based on the battery state of the UAV 130, the received signal strength of the UAV 130, and a wind speed and direction at a location point where the UAV 130 is located. As another example, when the electronic device 110 detects an input for the object 1109 (e.g., when a user desires to compare an area that allows round-trip flight and an area that allows one-way flight), the electronic device 110 may display the UI 1110 including the area 1111, the area 1112, the area 1113, and the area 1114.

As described above, the electronic device according to various embodiments of the present disclosure may provide information associated with a flight-enabled area based on the route of the UAV. The user may more efficiently control the operation of the UAV based on the provided information. Also, the user may set up the future operation plans of the UAV based on the provided information.

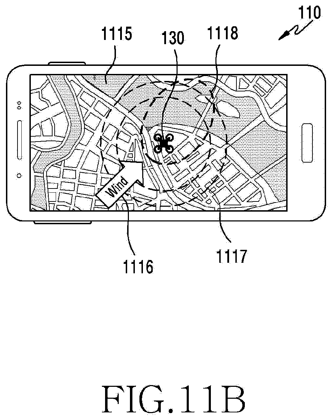

FIG. 11B is a diagram illustrating an example of a UI displaying a state of a UAV based on the route of the UAV, a wind speed, and a wind direction according to various embodiments of the present disclosure. The UI may be displayed in the electronic device 110 of FIGS. 1A and 1B.

FIG. 11B assumes that the UAV 130 performs a one-way flight.

Referring to FIG. 11B, the electronic device 110 may display a UI 1115. The UI 1115 may display information for indicating an area where the UAV 130 is capable of flying in a manner of superimposing the information on information indicating a region where the UAV 130 is located. Since it is assumed that the UAV 130 performs a one-way flight, a one-way flight area 1117 and a one-way flight area 1118 where the UAV 130 is capable of flying may indicate the one-way flight distance of the UAV 130. Also, the one-way flight area 1117 is an area determined based on the battery state of the UAV 130, and the one-way flight area 1118 may be an area determined based on a wind direction and speed at a location point where the UAV 130 is located in addition to the battery state of the UAV 130. Also, the UI 1115 may further include an image (or object) 1116 indicating the direction and strength of wind at a location point where the UAV 130 is currently located. The one-way flight area 1118 is an area determined further based on the wind direction and speed at the point where the UAV 130 is located, and thus the one-way flight area 1118 may have a different shape from the one-way flight area 1117. For example, the one-way flight area 1118 may have a biased shaped compared with the one-way flight area 1117 which is determined based on only the battery state of the UAV 130. In other words, the one-way flight area 1118 may be shaped in a manner in which a distance which corresponds to the direction and strength of wind is longer than that of the one-way flight area 1117 and a distance which does not correspond to the direction and strength of wind is shorter than that of the one-way flight area 1117. That is, the UAV 130 may have a higher resource efficiency when moving in a direction corresponding to the direction of wind, and thus the one-way flight area 1118 may be shaped to correspond to the direction of wind.

Unlike FIG. 11B, when the UAV 130 performs a round-trip flight, the one-way flight area 1118 may be displayed to be a differently shaped area. For return after moving in a direction corresponding to the direction of wind, the UAV 130 moves in the opposite direction of the direction of wind, and thus, the UAV 130 may have a lower resource efficiency. Therefore, the electronic device 110 may display an area shaped to be different from the one-way flight area 1118, by taking into consideration a difference in resource efficiency between a forward route and a reverse route.

As described above, the electronic device according to various embodiments of the present disclosure may provide a user with information associated with an area where the UAV is capable of flying by taking into consideration the route of the UAV and the wind direction and wind speed at a location point where the UAV is located. The user may perform control such that the UAV may more efficiently perform a task through the provided information.

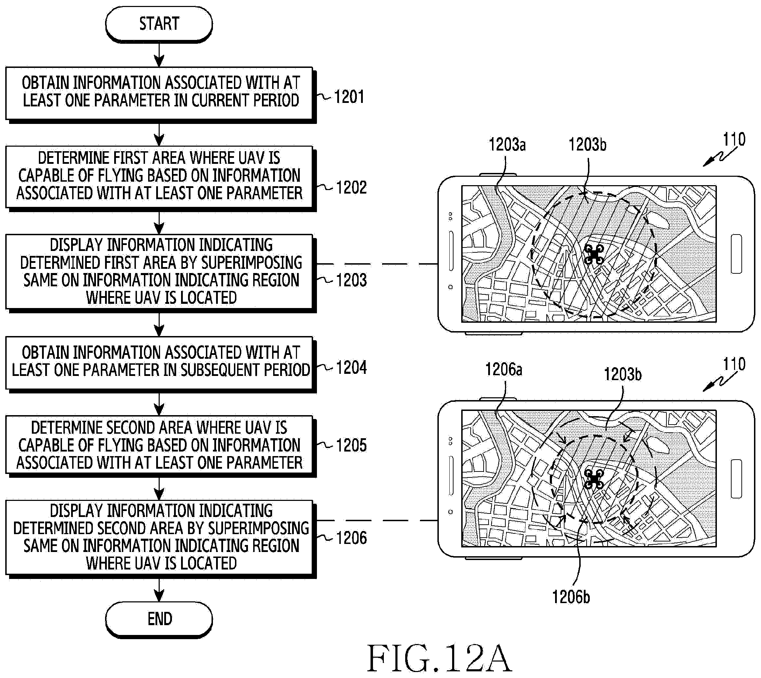

FIG. 12A is a diagram illustrating an example of an operation flow of an electronic device for updating and displaying an area where a UAV is capable of flying according to various embodiments of the present disclosure. The operational flow may be performed by the electronic device 110 of FIGS. 1A and 1B.

Referring to FIG. 12A, the electronic device 110 may obtain information associated with at least one parameter in the current period in operation 1201. In some embodiments, the information associated with the at least one parameter may be information stored in advance in the electronic device 110. In other embodiments, the information associated with the at least one parameter may be information received from a server. In other embodiments, the information associated with the at least one parameter may be information received from the UAV 130.

In operation 1202, the electronic device 110 may determine a first area where the UAV 130 is capable of flying based on the information associated with the at least one parameter in the current period.

In operation 1203, the electronic device 110 may display information indicating the first area by superimposing the same on information indicating a region where the UAV 130 is located. For example, the electronic device 110 may display a UI 1203a including a first area 1203b.

In operation 1204, the electronic device 110 may obtain information associated with at least one parameter in a subsequent period. The information associated with the at least one parameter obtained in operation 1204 may be different from the information associated with at least one parameter obtained in operation 1201.

In operation 1205, the electronic device 110 may determine a second area where the UAV 130 is capable of flying based on the information associated with the at least one parameter obtained in the subsequent period.

In operation 1206, the electronic device 110 may display information indicating the second area by superimposing the same on information indicating a region where the UAV 130 is located. For example, the electronic device 110 may display a UI 1206a including a second area 1206b.

In other words, the second area 1206b may be an area updated from the first area 1203b based on at least one of a change in the state of the UAV 130 and a change in the state of an environment where the UAV 130 is located. For example, the second area 1206b may be an area decreased from the first area 1203b based on a decrease in the amount of charge remaining in the battery of the UAV 130.

As described above, the electronic device according to various embodiments of the present disclosure may update and display an area where the UAV is capable of flying based on at least one of a change in the state of the UAV and a change in the state of an environment where the UAV is located. In other words, the electronic device may update and display an area where the UAV is capable of flying based on a predetermined period so that a user may accurately recognize the state of the UAV at a corresponding time.

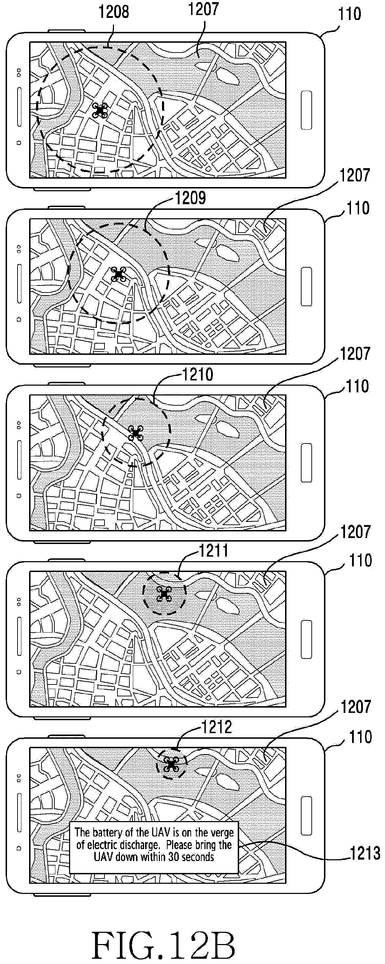

FIG. 12B is a diagram illustrating an example of a UI for updating and displaying an area where a UAV is capable of flying according to various embodiments of the present disclosure. The UI may be displayed in the electronic device 110 of FIGS. 1A and 1B.

Referring to FIG. 12B, the electronic device 110 may display a UI 1207 including a first area 1208 where the UAV 130 is capable of flying. The first area 1208 may be an area determined based on the battery state of the UAV 130 or the like. Also, the electronic device 110 may update the first area 1208 based on information periodically received from the UAV 130 and/or a server. For example, the electronic device 110 may display the UI 1207 including a second area 1209. The second area 1209 may be an area determined based on information associated with a location point where the UAV 130 moves and a changed state of the UAV 130. For example, the electronic device 110 may trace and display the location of the UAV 130, and thus, the location of the second area 1209 may correspond to the location of the UAV 130, and may be different from the location of the first area. Also, the electronic device 110 takes into consideration the battery state of the UAV 130 in real time and thus, the extent of the second area 1209 may be smaller than the extent of the first area 1208. The electronic device 110 may continuously trace a changed state and a changed location of the UAV 130.

In other words, the electronic device 110 may trace a changed location and a changed state of the UAV 130, and may display the UI 1207 including a third area 1210. The third area 1210 may have an extent smaller than that of the second area. Also, the third area 1210 may be in a different location from that of the second area 1209 since the UAV 130 moves.

A predetermined period of time after the third area 1210 is displayed, the electronic device 110 may display the UI 1207 including a fourth area 1211. The fourth area 1211 may be an area updated from the third area 1210 based on the location of the UAV 130 and the battery state of the UAV 130. In other words, the location of the fourth area 1211 may correspond to a changed location of the UAV 130. Also, the fourth area 1211 may have a smaller area than that of the third area 1210. At a point in time when the fourth area 1211 is displayed, the amount of charge remaining in the battery of the UAV 130 may be less than or equal to a threshold value. To indicate the same, the electronic device 110 may emphatically display the fourth area 1211.

A predetermined period of time after the fourth area 1211 is displayed, the electronic device 110 may display the UI 1207 including a fifth area 1212 and a notification message 1213. The fifth area 1212 may be emphatically displayed so as to indicate that the amount of charge remaining in the battery of the UAV 130 is close to 0. Also, the notification message 1213 may include the amount of time remaining until the battery is fully discharged and/or a guidance notification for inducing a control command from a user. The electronic device 110 may provide a user with guidance and an alarm (or alert), such as the fifth area 1212 and the alarm message 1213, thereby leading the user to perform an action that the UAV 130 needs.

According to various embodiments of the present disclosure, there is provided a method of an electronic device for controlling a UAV, the method including receiving, from the UAV associated with the electronic device, a signal including information regarding at least one parameter for determining an area where the UAV is capable of flying, determining the area where the UAV is capable of flying based on the information regarding the at least one parameter, and displaying information indicating the determined area where the UAV is capable of flying by superimposing the same on information indicating an location where the UAV is located.

In some embodiments, the information regarding the at least one parameter may include a value indicating the state of a battery of the UAV. Also, the method of the electronic device may further include an operation of determining a received signal strength of the received signal. The operation of determining the area where the UAV is capable of flying may include an operation of determining the area where the UAV is capable of flying based on the determined received signal strength and the value indicating the battery state of the UAV. Also, the information regarding the at least one parameter may further include a value indicating the strength of wind at a location point where the UAV is located and a value indicating the direction of wind of the location point of the UAV. The operation of determining the area where the UAV is capable of flying may include an operation of determining the area where the UAV is capable of flying based on the value indicating the strength of wind, the value indicating the direction of wind, and the value indicating the battery state of the UAV. Also, the operation of determining the area where the UAV is capable of flying may include an operation of determining the area where the UAV is capable of flying based on the value indicating the battery state of the UAV and information associated with the route of the UAV. Also, the method of the electronic device may further include an operation of displaying objects for determining the route of the UAV, and the objects for determining the route of the UAV may include an object indicating that the route of the UAV is one-way and an object indicating that the route of the UAV is round-trip.

In some embodiments, the method of the electronic device may further include an operation of displaying objects respectively indicating parameters to be used for determining the area where the UAV is capable of flying, and in response to detecting an input for at least one object among the displayed objects, transmitting, to the UAV, a signal for requesting information regarding at least one parameter indicated by the at least one object.

In some embodiments, the information indicating the area where the UAV is capable of flying may include information associated with an altitude that the UAV is capable of rising to, and the information associated with the altitude that the UAV is capable of rising to may be displayed using a contour line.

In some embodiments, the method of the electronic device may further include an operation of receiving, from the UAV, a signal including information for indicating that the UAV operates in an emergency state, and an operation of providing information for indicating that the UAV operates in the emergency state.

In some embodiments, the information indicating the region where the UAV is located may be determined based on map information received from a server, or may be determined based on an image obtained by a camera of the UAV.

According to various embodiments of the present disclosure, there is provided an electronic device, including a display unit, a communication unit, and a processor. The processor is functionally connected with the display unit, and communication unit, and is configured to perform control to receive, from the UAV associated with the electronic device, a signal including information regarding at least one parameter for determining an area where the UAV is capable of flying, determine the area where the UAV is capable of flying, based on the information regarding the at least one parameter, and perform control to display information indicating the determined area where the UAV is capable of flying by superimposing the same on information indicating a region where the UAV is located.

In some embodiments, the information regarding the at least one parameter may include a value indicating the state of a battery of the UAV. Also, the processor is further configured to determine the received signal strength of the received signal, and is configured to determine an area where the UAV is capable of flying based on the determined received signal strength and the state of a battery of the UAV. Also, the information regarding the at least one parameter may further include a value indicating the strength of wind at a location point where the UAV is located and a value indicating the direction of wind of the location point of the UAV. The processor may be configured to determine the area where the UAV is capable of flying based on the value indicating the strength of wind, the value indicating the direction of wind, and the value indicating the battery state of the UAV. Also, the processor may be configured to determine the area where the UAV is capable of flying based on the value indicating the battery state and information associated with the route of the UAV. Also, the processor may be further configured to perform control to display objects for determining the route of the UAV, and the objects for determining the route of the UAV may include an object indicating that the route of the UAV is one-way and an object indicating that the route of the UAV is round-trip.

In some embodiments, the processor may be further configured to perform control to display objects respectively indicating parameters to be used for determining the area where the UAV is capable of flying, and in response to detecting an input for at least one object among the displayed objects, transmit, to the UAV, a signal for requesting information regarding at least one parameter indicated by the at least one object.

In some embodiments, the information indicating the area where the UAV is capable of flying may include information associated with an altitude that the UAV is capable of rising to, and the information associated with the altitude that the UAV is capable of rising to may be displayed using a contour line.

In some embodiments, the processor may be configured to perform control to receive, from the UAV, a signal including information for indicating that the UAV operates in an emergency state, and provide information for indicating that the UAV operates in the emergency state.

In some embodiments, the information indicating the region where the UAV is located may be determined based on map information received from a server, or may be determined based on an image obtained by a camera of the UAV.

An electronic device according to various embodiments of the present disclosure may include a housing, a display exposed through a part of the housing, at least one wireless communication circuit included in the housing, a processor electrically connected with the display and the communication circuit, and a memory electrically connected with the processor. Upon execution, the memory may store instructions to enable the processor to perform receiving location data from a UAV using the wireless communication circuit and transmitting at least a part of the location data to an external server using the wireless communication circuit, receiving map information provided based on at least a part of the location data from the external server using the wireless communication circuit, receiving state data from the UAV using the wireless communication circuit, displaying, on the display, a map that is based on at least a part of the received map information, displaying an indicator indicating the UAV by superimposing the same on the map displayed on the display, based on at least a part of the location data, and displaying, on the display with reference to the indicator, a GUI indicating the flight capability of the UAV based on at least a part of the state data by superimposing the same on the map.

In some embodiments, the state data may include the state of charge in the battery embedded in the UAV.

In some embodiments, the state data may include data obtained by using a sensor embedded in the UAV. Also, the sensor may include at least one of a wind direction sensor, a wind speed sensor, and an altimeter.

In some embodiments, the flight capability may include a flight distance which is calculated based on the state of the UAV.

In some embodiments, the instructions may enable the processor to dynamically change at least one of the map, the indicator, and the GUI based on the movement of the UAV.

In some embodiments, the GUI may include a broken line or a solid line that substantially encloses the indicator on the map. Also, the solid line or the broken line may form a circular or oval shape. Also, the instructions may enable the processor to decrease the diameter or the size of the circle or oval based on the movement of the UAV.

A computer readable recording medium storing a computer program for operating a UAV according to various embodiments of the present disclosure may include a routine of instructions which enables the computer to perform operations, the operation including receiving location data from a UAV using a wireless communication circuit and transmitting at least a part of the location data to an external server using the wireless communication circuit, receiving map information provided based on at least a part of the location data from the external server using the wireless communication circuit, receiving state data from the UAV using the wireless communication circuit, displaying, on the display, a map that is based on at least a part of the received map information, displaying an indicator indicating the UAV in a manner of superimposing the indicator on the map displayed on the display, based on at least a part of the location data, and displaying, on the display with reference to the indicator, a GUI indicating the flight capability of the UAV based on at least a part of the state data in a manner of superimposing the GUI on the map.

Methods according to various embodiments stated in claims and/or specifications of the present disclosure may be implemented in hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the present disclosure as defined by the appended claims and/or disclosed herein.

The programs (software modules or software) may be stored in nonvolatile memories including a random-access memory (RAM) and a flash memory, a ROM, an EEPROM, a magnetic disc storage device, a compact disc-ROM (CD-ROM), digital versatile discs (DVDs), or other type optical storage devices, or a magnetic cassette. Alternatively, any combination of some or all of the may form a memory in which the program is stored. Further, a plurality of such memories may be included in the electronic device.

In addition, the programs may be stored in an attachable storage device which may access the electronic device through communication networks such as the Internet, Intranet, LAN, WLAN, and storage area network (SAN) or a combination thereof. Such a storage device may access the electronic device via an external port. Further, a separate storage device on the communication network may access a portable electronic device.

## Claims

1. A method of an electronic device for controlling an unmanned aerial vehicle (UAV), the method being **characterised by** the following steps:
receiving, from the UAV, a signal comprising information regarding at least one parameter for identifying an area where the UAV is capable of flying;
identifying the area based on the information regarding the at least one parameter; and
displaying information for indicating the identified area superimposed on information indicating a space in which the UAV is located.

2. The method of claim 1, wherein the information regarding the at least one parameter comprises a value for indicating a state of a battery of the UAV.

3. The method of claim 2, further comprising:
identifying a receive strength of the received signal,
wherein the identifying of the area comprises identifying the area based on the value for indicating the state of the battery of the UAV and the identified receive strength.

4. The method of claim 2,
wherein the information regarding the at least one parameter further comprises a value for indicating a wind strength of a location point in which the UAV is located and a value for indicating a wind direction of the location point, and
wherein the identifying of the area comprises identifying the area based on the value for indicating the state of the battery of the UAV, the value for indicating the wind strength, and the value for indicating the wind direction.

5. The method of claim 2, wherein the identifying of the area comprises identifying the area based on the value for indicating the state of the battery of the UAV and information regarding a route of the UAV.

6. The method of claim 5, further comprising:
displaying objects for identifying the route of the UAV,
wherein the objects for identifying the route of the UAV comprise at least one of an object indicating that the route of the UAV is one-way or an object indicating that the route of the UAV is round-trip.

7. The method of claim 1, further comprising:
displaying objects respectively indicating parameters to be used for identifying the area where the UAV is capable of flying; and
in response to detecting an input on at least one object among the displayed objects, transmitting, to the UAV, a signal for requesting information regarding at least one parameter which is indicated by the at least one object.

8. An electronic device (110) for controlling an unmanned aerial vehicle (UAV), the electronic device comprising:
a communication unit (420);
a display unit (440); and
a processor (400); operatively coupled to the communication unit and the display unit, and being **characterised by** being configured to:
control to receive, from the UAV, a signal comprising information regarding at least one parameter for identifying an area where the UAV is capable of flying,
identify the area based on the information regarding the at least one parameter, and
control to display information for indicating the identified area superimposed on information indicating a space in which the UAV is located.

9. The electronic device of claim 8, wherein the information regarding the at least one parameter comprises a value for indicating a state of a battery of the UAV.

10. The electronic device of claim 9, wherein the processor is further configured to:
identify a receive strength of the received signal, and
identify the area based on the value for indicating the state of the battery of the UAV and the identified receive strength.

11. The electronic device of claim 9, wherein the information regarding the at least one parameter further comprises a value for indicating a wind strength of a location point in which the UAV is located and a value for indicating a wind direction of the location point, and
wherein the processor is further configured to identify the area based on the value for indicating the state of the battery of the UAV, the value for indicating the wind strength, and the value for indicating the wind direction.

12. The electronic device of claim 9, wherein the processor is further configured to identify the area based on the value for indicating the state of the battery of the UAV and information regarding a route of the UAV.

13. The electronic device of claim 12, wherein the processor is further configured to control to display objects for identifying the route of the UAV, and
wherein the objects for identifying the route of the UAV comprises at least one of an object indicating that the route of the UAV is one-way or an object indicating that the route of the UAV is round-trip.

14. The electronic device of claim 8, wherein the processor is further configured to:
control to display objects respectively indicating parameters to be used for identifying the area where the UAV is capable of flying, and
in response to detecting an input on at least one object among the displayed objects, control to transmit, to the UAV, a signal for requesting information regarding at least one parameter which is indicated by the at least one object.

15. A non-transitory computer-readable storage medium configured to store one or more computer programs that, when executed by at least one processor, cause the at least one processor to perform a method for controlling an unmanned aerial vehicle (UAV), the method comprising:
receiving, from the UAV, a signal comprising information regarding at least one parameter for identifying an area where the UAV is capable of flying;
identify the area based on the information regarding the at least one parameter; and
displaying information for indicating the identified area superimposed on information indicating a space in which the UAV is located.

## Patentansprüche

1. Verfahren eines elektronischen Gerätes zum Steuern eines unbemannten Luftfahrzeuges, Unmanned Aerial Vehicle (UAV), wobei das Verfahren durch die folgenden Schritte gekennzeichnet ist:
Empfangen eines Signals, das Informationen bezüglich mindestens eines Parameters zum Identifizieren eines Gebietes umfasst, in dem das UAV des Fliegens fähig ist, vom UAV;
Identifizieren des Gebietes basierend auf den Informationen bezüglich des mindestens einen Parameters und
Anzeigen von Informationen zum Anzeigen des identifizierten Gebietes, die Informationen überlagert sind, die einen Raum anzeigen, in dem sich das UAV befindet.

2. Verfahren nach Anspruch 1, wobei die Informationen bezüglich des mindestens einen Parameters einen Wert zum Anzeigen eines Zustandes einer Batterie des UAVs umfassen.

3. Verfahren nach Anspruch 2, das ferner Folgendes umfasst:
Identifizieren einer Empfangsstärke des empfangenen Signals,
wobei das Identifizieren des Gebietes Identifizieren des Gebietes basierend auf dem Wert zum Anzeigen des Zustandes der Batterie des UAVs und der identifizierten Empfangsstärke umfasst.

4. Verfahren nach Anspruch 2,
wobei die Informationen bezüglich des mindestens einen Parameters ferner einen Wert zum Anzeigen einer Windstärke eines Ortspunktes, an dem sich das UAV befindet, und einen Wert zum Anzeigen einer Windrichtung des Ortspunktes umfassen und
wobei das Identifizieren des Gebietes Identifizieren des Gebietes basierend auf dem Wert zum Anzeigen des Zustandes der Batterie des UAVs, dem Wert zum Anzeigen der Windstärke und dem Wert zum Anzeigen der Windrichtung umfasst.

5. Verfahren nach Anspruch 2, wobei das Identifizieren des Gebietes Identifizieren des Gebietes basierend auf dem Wert zum Anzeigen des Zustandes der Batterie des UAVs und Informationen bezüglich einer Route des UAVs umfasst.

6. Verfahren nach Anspruch 5, das ferner Folgendes umfasst:
Anzeigen von Objekten zum Identifizieren der Route des UAVs,
wobei die Objekte zum Identifizieren der Route des UAVs mindestens eines von einem Objekt, das anzeigt, dass die Route des UAVs ein Hinflug ist, oder einem Objekt umfassen, das anzeigt, dass die Route des UAVs ein Rundflug ist.

7. Verfahren nach Anspruch 1, das ferner Folgendes umfasst:
Anzeigen von Objekten bzw. Anzeigen von Parametern, die zum Identifizieren des Gebietes zu verwenden sind, in dem das UAV des Fliegens fähig ist; und,
in Reaktion auf das Erfassen einer Eingabe auf mindestens einem Objekt unter den angezeigten Objekten, Senden eines Signals zum Anfordern von Informationen bezüglich mindestens eines Parameters, der durch das mindestens eine Objekt angezeigt wird, zum UAV.

8. Elektronisches Gerät (110) zum Steuern eines unbemannten Luftfahrzeuges, Unmanned Aerial Vehicle (UAV), wobei das elektronische Gerät Folgendes umfasst:
eine Kommunikationseinheit (420);
eine Anzeigeeinheit (440) und
einen Prozessor (400);
der wirkend mit der Kommunikationseinheit und der Anzeigeeinheit gekoppelt ist und **dadurch gekennzeichnet ist, dass** er konfiguriert ist,
zu steuern, vom UAV ein Signal zu empfangen, das Informationen bezüglich mindestens eines Parameters zum Identifizieren eines Gebietes umfasst, in dem das UAV des Fliegens fähig ist,
das Gebiet basierend auf den Informationen bezüglich des mindestens einen Parameters zu identifizieren und zu steuern, Informationen zum Anzeigen des identifizierten Gebietes anzuzeigen, die Informationen überlagert sind, die einen Raum anzeigen, in dem sich das UAV befindet.

9. Elektronisches Gerät nach Anspruch 8, wobei die Informationen bezüglich des mindestens einen Parameters einen Wert zum Anzeigen eines Zustandes einer Batterie des UAVs umfassen.

10. Elektronisches Gerät nach Anspruch 9, wobei der Prozessor ferner konfiguriert ist,
eine Empfangsstärke des empfangenen Signals zu identifizieren und
das Gebiet basierend auf dem Wert zum Anzeigen des Zustandes der Batterie des UAVs und der identifizierten Empfangsstärke zu identifizieren.

11. Elektronisches Gerät nach Anspruch 9, wobei die Informationen bezüglich des mindestens einen Parameters ferner einen Wert zum Anzeigen einer Windstärke eines Ortspunktes, an dem sich das UAV befindet, und einen Wert zum Anzeigen einer Windrichtung des Ortspunktes umfassen und
wobei der Prozessor ferner konfiguriert ist, das Gebiet basierend auf dem Wert zum Anzeigen des Zustandes der Batterie des UAVs, dem Wert zum Anzeigen der Windstärke und dem Wert zum Anzeigen der Windrichtung zu identifizieren.

12. Elektronisches Gerät nach Anspruch 9, wobei der Prozessor ferner konfiguriert ist, das Gebiet basierend auf dem Wert zum Anzeigen des Zustandes der Batterie des UAVs und Informationen bezüglich einer Route des UAVs zu identifizieren.

13. Elektronisches Gerät nach Anspruch 12, wobei der Prozessor ferner konfiguriert ist, zu steuern, Objekte zum Identifizieren der Route des UAVs anzuzeigen, und wobei die Objekte zum Identifizieren der Route des UAVs mindestens eines von einem Objekt, das anzeigt, dass die Route des UAVs ein Hinflug ist, oder einem Objekt umfassen, das anzeigt, dass die Route des UAVs ein Rundflug ist.

14. Elektronisches Gerät nach Anspruch 8, wobei der Prozessor ferner konfiguriert ist,
zu steuern, Objekte anzuzeigen bzw. Parameter anzuzeigen, die zum Identifizieren des Gebietes zu verwenden sind, in dem das UAV des Fliegens fähig ist, und,
in Reaktion auf das Erfassen einer Eingabe auf mindestens einem Objekt unter den angezeigten Objekten, zu steuern, ein Signal zum Anfordern von Informationen bezüglich mindestens eines Parameters, der durch das mindestens eine Objekt angezeigt wird, zum UAV zu senden.

15. Nichtflüchtiges computerlesbares Speichermedium, das konfiguriert ist, ein oder mehrere Computerprogramme zu speichern, die, wenn sie durch mindestens einen Prozessor ausgeführt werden, den mindestens einen Prozessor veranlassen, ein Verfahren zum Steuern eines unbemannten Luftfahrzeuges, Unmanned Aerial Vehicle (UAV), durchzuführen, wobei das Verfahren Folgendes umfasst:
Empfangen eines Signals, das Informationen bezüglich mindestens eines Parameters zum Identifizieren eines Gebietes umfasst, in dem das UAV des Fliegens fähig ist, vom UAV;
Identifizieren des Gebietes basierend auf den Informationen bezüglich des mindestens einen Parameters und
Anzeigen von Informationen zum Anzeigen des identifizierten Gebietes, die Informationen überlagert sind, die einen Raum anzeigen, in dem sich das UAV befindet.

## Revendications

1. Procédé d'un dispositif électronique pour commander un véhicule aérien sans pilote (UAV), le procédé étant **caractérisé par** les étapes suivantes :
la réception, en provenance de l'UAV, d'un signal comprenant des informations relatives à au moins un paramètre pour identifier une zone dans laquelle l'UAV est capable de voler ;
l'identification de la zone sur la base des informations relatives à l'au moins un paramètre ; et
l'affichage d'informations pour indiquer la zone identifiée, superposées sur des informations indiquant un espace dans lequel l'UAV est situé.

2. Procédé selon la revendication 1, dans lequel les informations relatives à l'au moins un paramètre comprennent une valeur pour indiquer un état d'une batterie de l'UAV.

3. Procédé selon la revendication 2, comprenant en outre :
l'identification d'une force de réception du signal reçu,
dans lequel l'identification de la zone comprend l'identification de la zone sur la base de la valeur pour indiquer l'état de la batterie de l'UAV et de la force de réception identifiée.

4. Procédé selon la revendication 2,
dans lequel les informations relatives à l'au moins un paramètre comprennent en outre une valeur pour indiquer une force du vent d'un point d'emplacement auquel l'UAV est situé et une valeur pour indiquer une direction du vent du point d'emplacement, et
dans lequel l'identification de la zone comprend l'identification de la zone sur la base de la valeur pour indiquer l'état de la batterie de l'UAV, la valeur pour indiquer la force du vent, et la valeur pour indiquer la direction du vent.

5. Procédé selon la revendication 2, dans lequel l'identification de la zone comprend l'identification de la zone sur la base de la valeur pour indiquer l'état de la batterie de l'UAV et d'informations relatives à un itinéraire de l'UAV.

6. Procédé selon la revendication 5, comprenant en outre :
l'affichage d'objets pour identifier l'itinéraire de l'UAV,
dans lequel les objets pour identifier l'itinéraire de l'UAV comprennent au moins l'un d'un objet indiquant que l'itinéraire de l'UAV est un trajet aller ou un objet indiquant que l'itinéraire de l'UAV est un trajet aller-retour.

7. Procédé selon la revendication 1, comprenant en outre :
l'affichage d'objets indiquant respectivement des paramètres à utiliser pour l'identification de la zone dans laquelle l'UAV est capable de voler ; et
en réponse à la détection d'une entrée sur au moins un objet parmi les objets affichés, la transmission, à destination de l'UAV, d'un signal pour demander des informations relatives à au moins un paramètre qui est indiqué par l'au moins un objet.

8. Dispositif électronique (110) pour commander un véhicule aérien sans pilote (UAV), le dispositif électronique comprenant :
une unité de communication (420) ;
une unité d'affichage (440) ; et
un processeur (400) couplé, de manière opérationnelle, à l'unité de communication et à l'unité d'affichage, et étant **caractérisé en ce qu'**il est configuré pour effectuer :
la commande de la réception, en provenance de l'UAV, d'un signal comprenant des informations relatives à au moins un paramètre pour identifier une zone dans laquelle l'UAV est capable de voler,
l'identification de la zone sur la base des informations relatives à l'au moins un paramètre, et
la commande de l'affichage d'informations pour indiquer la zone identifiée, superposées sur des informations indiquant un espace dans lequel l'UAV est situé.

9. Dispositif électronique selon la revendication 8, dans lequel les informations relatives à l'au moins un paramètre comprennent une valeur pour indiquer un état d'une batterie de l'UAV.

10. Dispositif électronique selon la revendication 9, dans lequel le processeur est en outre configuré pour effectuer :
l'identification d'une force de réception du signal reçu, et
l'identification de la zone sur la base de la valeur pour indiquer l'état de la batterie de l'UAV et de la force de réception identifiée.

11. Dispositif électronique selon la revendication 9, dans lequel les informations relatives à l'au moins un paramètre comprennent en outre une valeur pour indiquer une force du vent d'un point d'emplacement auquel l'UAV est situé et une valeur pour indiquer une direction du vent du point d'emplacement, et
dans lequel le processeur est en outre configuré pour effectuer l'identification de la zone sur la base de la valeur pour indiquer l'état de la batterie de l'UAV, la valeur pour indiquer la force du vent, et la valeur pour indiquer la direction du vent.

12. Dispositif électronique selon la revendication 9, dans lequel le processeur est en outre configuré pour effectuer l'identification de la zone sur la base de la valeur pour indiquer l'état de la batterie de l'UAV et d'informations relatives à un itinéraire de l'UAV.

13. Dispositif électronique selon la revendication 12, dans lequel le processeur est en outre configuré pour effectuer la commande de l'affichage d'objets pour identifier l'itinéraire de l'UAV, et
dans lequel les objets pour identifier l'itinéraire de l'UAV comprennent au moins l'un d'un objet indiquant que l'itinéraire de l'UAV est un trajet aller ou un objet indiquant que l'itinéraire de l'UAV est un trajet aller-retour.

14. Dispositif électronique selon la revendication 8, dans lequel le processeur est en outre configuré pour effectuer :
la commande de l'affichage d'objets indiquant respectivement des paramètres à utiliser pour l'identification de la zone dans laquelle l'UAV est capable de voler, et
en réponse à la détection d'une entrée sur au moins un objet parmi les objets affichés, la commande de la transmission, à destination de l'UAV, d'un signal pour demander des informations relatives à au moins un paramètre qui est indiqué par l'au moins un objet.

15. Support de mémorisation lisible par ordinateur non transitoire configuré pour mémoriser un ou plusieurs programmes informatiques qui, lorsqu'ils sont exécutés par au moins un processeur, amènent l'au moins un processeur à effectuer un procédé pour commander un véhicule aérien sans pilote (UAV), le procédé comprenant :
la réception, en provenance de l'UAV, d'un signal comprenant des informations relatives à au moins un paramètre pour identifier une zone dans laquelle l'UAV est capable de voler ;
l'identification de la zone sur la base des informations relatives à l'au moins un paramètre ; et
l'affichage d'informations pour indiquer la zone identifiée, superposées sur des informations indiquant un espace dans lequel l'UAV est situé.
